(19) Europäisches Patentamt
European Patent Office
Office européen des brevets

(11) EP 1 171 877 B1

(12) **EUROPÄISCHE PATENTSCHRIFT**

(45) Veröffentlichungstag und Bekanntmachung des Hinweises auf die Patenterteilung:
**27.09.2006 Patentblatt 2006/39**

(21) Anmeldenummer: **00910855.6**

(22) Anmeldetag: **17.03.2000**

(51) Int Cl.:
***G11B 7/24*** *(2006.01)*

(86) Internationale Anmeldenummer:
**PCT/EP2000/002385**

(87) Internationale Veröffentlichungsnummer:
**WO 2000/060586 (12.10.2000 Gazette 2000/41)**

(54) **WIEDERBESCHREIBBARES OPTISCHES AUFZEICHNUNGSMATERIAL FÜR BLAUE LASER**
ERASABLE OPTICAL RECORDING MATERIAL FOR BLUE LASERS
MATERIAU D'ENREGISTREMENT OPTIQUE REENREGISTRABLE POUR LASERS BLEUS

(84) Benannte Vertragsstaaten:
**AT BE CH CY DE DK ES FI FR GB GR IE IT LI LU MC NL PT SE**

(30) Priorität: **30.03.1999 DE 19914325**

(43) Veröffentlichungstag der Anmeldung:
**16.01.2002 Patentblatt 2002/03**

(73) Patentinhaber: **Bayer MaterialScience AG**
**51368 Leverkusen (DE)**

(72) Erfinder:
- **BERNETH, Horst**
  **D-51373 Leverkusen (DE)**
- **BIERINGER, Thomas**
  **D-51519 Odenthal (DE)**
- **HAGEN, Rainer**
  **D-51375 Leverkusen (DE)**
- **KOSTROMINE, Serguei**
  **D-53913 Swisttal (DE)**

(56) Entgegenhaltungen:
**EP-A- 0 823 442**
**DD-A- 297 030**
**DE-A- 19 703 132**
**DE-A- 19 706 029**
**DE-A- 19 720 288**
**US-A- 5 024 784**
**US-A- 5 173 381**
**US-A- 5 496 670**
**US-A- 5 543 267**
**US-A- 5 641 846**
**US-A- 5 858 585**

- **MENZEL H ET AL: "LANGMUIR-BLODGETT FILMS OF PHOTOCHROMIC POLYGLUTAMATES. \4. SPECTROSCOPIC AND STRUCTURAL STUDIES ON LANGMUIR-BLODGETT FILMS OF COPOLYGLUTAMATES BEARING AZOBENZENE MOIETIES AND LONG ALKYL CHAINS" MACROMOLECULES,US, AMERICAN CHEMICAL SOCIETY. EASTON, Bd. 26, Nr. 14, 5. Juli 1993 (1993-07-05), Seiten 3644-3649, XP000381886 ISSN: 0024-9297**
- **STUMPE J ET AL: "PHOTO-ORIENTATION IN AMORPHOUS AND ALIGNED FILMS OF PHOTOCHROMIC LIQUID CRYSTALLINE POLYMERS" THIN SOLID FILMS,CH,ELSEVIER-SEQUOIA S.A. LAUSANNE, Bd. 284/285, 15. September 1996 (1996-09-15), Seiten 252-256, XP000685386 ISSN: 0040-6090**
- **HOLME N C R ET AL: "PHOTOINDUCED ANISOTROPY MEASUREMENTS IN LIQUID-CRYSTALLINE AZOBENZENE SIDE-CHAIN POLYESTERS" APPLIED OPTICS,US,OPTICAL SOCIETY OF AMERICA,WASHINGTON, Bd. 35, Nr. 23, 10. August 1996 (1996-08-10), Seiten 4622-4627, XP000623814 ISSN: 0003-6935**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 171 877 B1

## Beschreibung

Die vorliegende Erfindung betrifft ein optisches Aufzeichnungsmaterial für die binäre und/oder Multibit- und/oder Volumendatenspeicherung, dessen Herstellung und Verwendung als Speichermaterial bei Wellenlängen um 400 nm.

Es gibt im Stand der Technik bereits Materialien für die binäre und/oder Multibit- und/oder Volumendatenspeicherung, die Azofarbstoffe als Antennen für das einfallende Licht besitzen. Insbesondere die Klasse der Seitenkettenpolymere, bei der neben den Azofarbstoffen noch formanisotrope Komponenten als Seitenketten Verwendung finden, zeichnen sich durch die Größe der lichtinduzierbaren Doppelbrechung aus. Bei diesen Materialien vollziehen die Farbstoffe in Kombination mit formanisotropen Komponenten eine Orientierung im aktinischen Lichtfeld, falls sie mit polarisiertem Licht geeigneter Wellenlänge bestrahlt werden: Es kommt zum Aufbau einer lichtinduzierten Doppelbrechung.

US-Patentschrift US 5 384 221 beschreibt ein optisches Aufzeichnungsmaterial zur binären und/oder Multibit- und/oder Volumendatenspeicherung, enthaltend mindestens einen, bei Bestrahlung durch polarisierte elektromagnetische Strahlung seine räumliche Anordnung verändernden polymeren und/oder oligomeren Azofarbstoff und gegebenenfalls mindestens eine formanisotrope Gruppierung.

Diese Materialien erfüllen jedoch noch nicht alle Anforderungen, inbesondere können sie aufgrund ihres Absorptionsverhaltens (zu hohe optische Dichte) bei 400 nm nicht zur Datenspeicherung herangezogen werden: In Reflexionsaufbauten wird das aktinische Licht in den Aufzeichnungsschichten schon nach wenigen Atomlagen merklich absorbiert werden und die komplette Dicke des Aufzeichnungsmaterials ist durch das aktinische Licht nicht zu erfassen. Dies führt zum einen dazu, dass es beim Speichern der optischen Information durch die Lichtabsorption zu einer deutlichen Erhöhung der Probentemperatur kommt. Unter deutlicher Erhöhung der Probentemperatur wird eine Temperaturerhöhung von mindestens 20°C, genauer von mindestens 50°C, besonders von mehr als 100°C und ganz besonders von mindestens 140°C verstanden. Diese Temperaturerhöhung kann zum Beispiel mit einem IR-Thermokopf (Inframetrics Thermocam PM 290) gemessen werden.

Zum anderen verhindert die hohe Absorption ein Lesen der lichtinduzierten Information mit der Wellenlängen, die zum Schreiben verwendet wurde: Das vom Aufzeichnungsmaterial am Detektionsaufbau ankommende Licht ist zu schwach, um noch ein ausreichendes Signal-Rauschverhältnis zu besitzen. Ein ausreichendes Signal-/Rauschverhältnis liegt vor, wenn die Intensität des detektierten Lichtes sich um eine Größenordnung vom Streuuntergrund abhebt.

Diese bekannten Materialien zeigen manchmal keine ausreichende Wiederbeschreibbarkeit: Es wurde bereits gezeigt, dass sich im Falle der Bestrahlung mit linear polarisiertem Licht durch eine Drehen der Polarisationsrichtung des aktinischen Lichtes um beispielsweise 90°, die zuvor induzierte Doppelbrechung löschen läßt. Alternativ kann beispielsweise durch die Verwendung zirkular polarisierten Lichtes die Doppelbrechung reduziert werden. Bei einem erneuten Schreibvorgang wird bei der Bestrahlung mit linear polarisiertem Licht im Stand der Technik allerdings nicht der Doppelbrechungswert erzeugt, wie er beim Beschreiben einer isotropen Probe erzielt wurde.

Aus den oben genannten Gründen (zu hohe optische Dichte) war insbesondere bei Wellenlängen um 400 nm eine Wiederbeschreibung nicht möglich.

Die Beschreibbarkeit bei 400 nm ist jedoch für den Einsatz der gerade kommerziell erhältlichen blauen Laserdioden (NICHIA) von großer Bedeutung, da diese Laserdioden die Erzeugung höherer Speicherdichten ermöglichen.

Aus der US 5 641 846 ist ein Aufzeichnungsmaterial bekannt, in dem Azofarbstoff-Einheiten mit formanisotropen Gruppierungen und Acryl- oder Methacrylsäureestereinheiten zu Polymeren für die Datenspeicherung aufgebaut werden. Es fehlt jedoch sowohl ein Hinweis auf die optische Dichte als auch eine Angabe, wie man eine Volumendatenspeicherung bei Schichtdicken von > 1 mm erzielen soll.

Es bestand demnach ein Bedarf nach einem Aufzeichnungsmaterial, das zur optischen Datenspeicherung für den Wellenlängenbereich der blauen Laserdioden verwendet werden kann. Dieses Material sollte in puncto lichtinduzierbarer Doppelbrechung vergleichbare Werte bei der Belichtung im blauen (um 400 nm) erzielen, wie bei der Belichtung im grünen Spektralbereich (um 515 nm). Es sollte zudem eine Wiederbeschreibbarkeit besitzen.

Es hat sich überraschenderweise gezeigt, dass die in dieser Anmeldung aufgeführten Aufzeichungsmaterialien die genannten Anforderungen erfüllen.

Optisches Aufzeichnungsmaterial für binäre und/oder Multibit- und/oder Volumendatenspeicherung, enthaltend mindestens einen, bei Bestrahlung durch polarisierte elektromagnetische Strahlung seine räumliche Anordnung verändernden polymeren oder oligomeren Azofarbstoff, mindestens eine formanisotrope Gruppierung für Polyacrylate oder -methacrylate der Formel (IV)

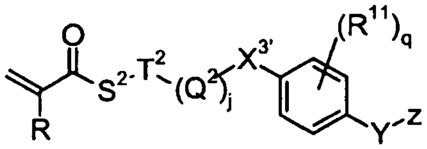

(IV),

worin

| | |
|---|---|
| R | für Wasserstoff oder Methyl steht, |
| $X^{3'}$, $X^{4'}$ | unabhängig voneinander für eine direkte Bindung, -O-, -S-, -(N-$R^5$)-, -C($R^6R^7$)-, -(C=O)-, -(CO-O)-, -(CO-$NR^5$)-, -($SO_2$)-, -($SO_2$-O)-, -($SO_2$-$NR^5$)-, -(C=$NR^8$)- oder -($CNR^8$-$NR^5$)- stehen, |
| $R^5$, $R^8$, $R^{13}$ | unabhängig voneinander für Wasserstoff, $C_1$- bis $C_{20}$-Alkyl, $C_3$- bis $C_{10}$-Cycloalkyl, $C_2$- bis $C_{20}$-Alkenyl, $C_6$- bis $C_{10}$-Aryl, $C_1$- bis $C_{20}$- Alkyl-(C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)- stehen oder |
| $R^6$, $R^7$ | unabhängig voneinander für Wasserstoff, Halogen, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl stehen, |
| Y | für eine einfache Bindung, -COO-, OCO-, -CONH-, -NHCO-, -CON($CH_3$)-, -N($CH_3$)CO-, -O-, -NH- oder -N($CH_3$)- steht, |
| Z | für einen Rest der Formel |

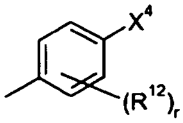

(IIIa)

oder

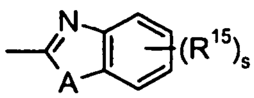

(IIIb)

steht,

worin

A für O, S oder N-$C_1$- bis $C_4$-Alkyl steht,

$X^4$ für $X^{4'}$-$R^{13}$ steht,

$R^{11}$, $R^{12}$, $R^{15}$ unabhängig voneinander für Wasserstoff, Halogen, Cyano, Nitro, $C_1$- bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl oder $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-($SO_2$)-, $C_1$-bis $C_{20}$-Alkyl-(C=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$- bis $C_{20}$-Alkyl-NH-(C=O)- oder $C_6$- bis $C_{10}$-Aryl-NH-(C=O)- stehen,

q, r, s unabhängig voneinander für eine ganze Zahl von 0 bis 4, vorzugsweise 0 bis 2 stehen,

$Q^2$ für -O-, -S-, -(N-$R^5$)-, -C($R^6R^7$)-, -(C=O)-, -(CO-O)-, -(CO-$NR^5$)-, -($SO_2$)-, -($SO_2$-O)-, -($SO_2$-$NR^5$)-, -(C=$NR^8$)-, -($CNR^8$-$NR^5$)-, -$(CH_2)_p$-, p- oder m-$C_6H_4$- oder einen zweibindigen Rest der Formeln

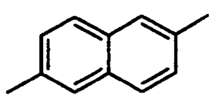

oder

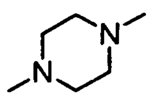

steht,

j für eine ganze Zahl von 0 bis 4 steht, wobei für j > 1 die einzelnen $Q^1$ verschiedene Bedeutungen haben können,
p für eine ganze Zahl von 2 bis 12, vorzugsweise 2 bis 8, insbesondere 2 bis 4 steht,
$T^2$ für $-(CH_2)_p-$ steht, wobei die Kette durch -O-, $-NR^9-$, oder $-OSiR^{10}{}_2O-$unterbrochen sein kann,
$S^2$ für eine direkte Bindung, -O-, -S- oder $-NR^9-$ steht,
$R^9$ für Wasserstoff, Methyl, Ethyl oder Propyl steht und
$R^{10}$ für Methyl oder Ethyl steht,und Acryl- oder Methacrylsäureester der Formel (V)

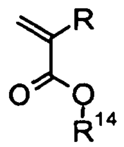

(V),

worin
R für Wasserstoff oder Methyl steht und
$R^{14}$ für, gegebenenfalls verzweigtes, $C_1$- bis $C_{20}$-Alkyl oder für einen wenigstens eine weitere Acryleinheit enthaltenden Rest steht,

dadurch gekennzeichnet, dass

- das Absorptionsmaximum des Farbstoffs wenigstens 30 nm, bevorzugt 40 nm, von 400 nm verschieden ist und
- der Farbstoff bei 400 nm eine optische Dichte von höchstens 60 % seines Absorptionsmaximums erreicht und
- eine Wiederbeschreibbarkeit durch Änderung des Polarisationszustandes des aktinischen Lichtes vorliegt, wobei nach einem Lösch-/Wiederschreib-Cyclus eine Intensität von mindestens 80 % des ursprünglichen Wertes erreicht wird, und
- wobei der Schreibvorgang bei sonst gleichen Bedingungen bei 400 nm nicht langsamer abläuft als bei 500 nm und die dabei induzierten Doppelbrechungswerte sich nicht um mehr als 10% von denen bei 500 nm induzierten Doppelbrechungswerten unterscheiden und
- die Schichtdicke ≥ 1 mm beträgt und
- im Feststoff bei einer Dicke von 250 nm die optische Dichte ≤ 1 bei einer Wellenlänge im Bereich von 380 bis 420 nm,

wobei mindestens eines der Polymere der folgenden Formeln enthalten ist:

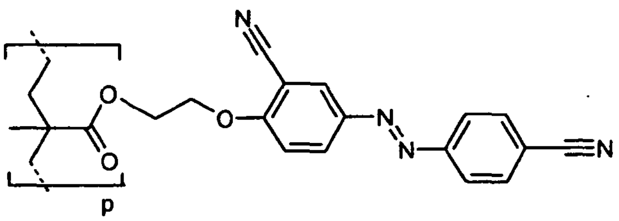

XIV

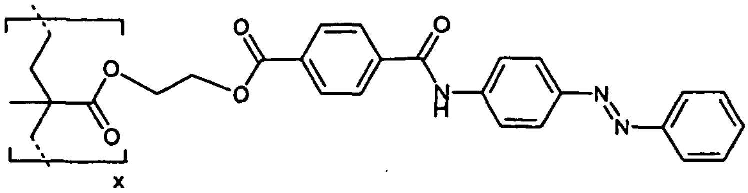

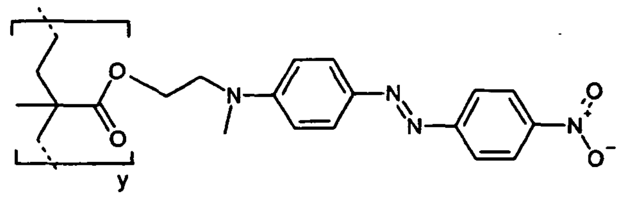

XV

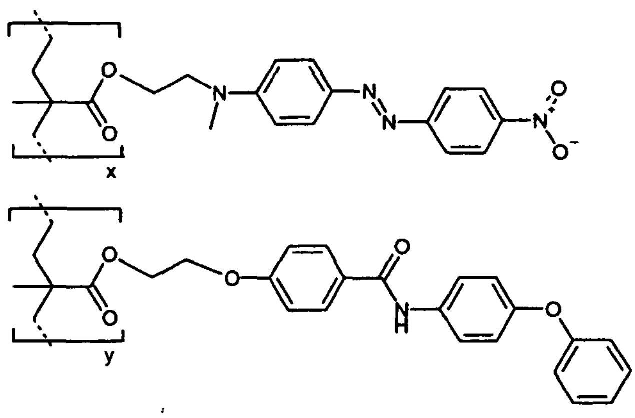

XVI

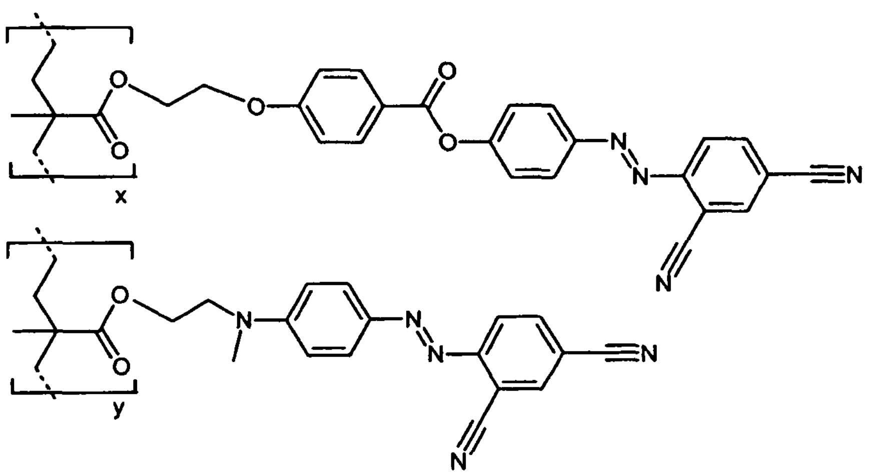

XVIII

wobei bei den Co- und Terpolymeren die Zusammensetzungen variieren können, unter der Maßgabe, dass sich x + y zu 100 mol-% , bzw. x + y + z zu 100 mol % ergänzen und p zwischen 10 und 1000 liegt.

Dies wird z. B. von Polymeren erreicht, deren Absorptionsmaximum (AM) des Farbstoffs kleiner als 370 nm, bevorzugt 360 nm ist.

Es ist aber ebenfalls möglich, dass Polymere und oder Oligomere verwendet werden, deren Absorptionsmaximum des Farbstoffs größer als 450 nm ist.

Sehr gute Ergebnisse wurden erzielt, wenn im Aufzeichnungsmaterial ein Copolymer enthalten ist, das mindestens eine Komponente enthält deren AM größer als 450 nm, mindestens eine Komponente enthält, deren AM kleiner als 360 nm ist.

Besonders vorteilhafte Effekte lassen sich erzielen, wenn die Absorptionsbande mit der maximalen Absorption besonders schmal ist.

Außerdem ist besonders darauf zu achten, dass das erfindungsgemäße Aufzeichnungsmaterial im Feststoff

bei einer Dicke von 250 nm eine optische Dichte ≤ 1 bevorzugt kleiner gleich 0,5, ganz besonders bevorzugt kleiner gleich 0,3 bei einer Wellenlänge in einem Wellenlängenbereich von 380 bis 420 nm, bevorzugt von 390 bis 410 nm, ganz besonders bevorzugt von 395 bis 405 nm besitzt.

Die optische Dichte kann mit kommerziellen UV-/VIS-Spektrometern (z.B. CARY, 4G, UV-/VIS Spektrometer) bestimmt werden.

Ist dies gewährleistet, so lassen sich die erfindungsgmäßen Effekte günstig dadurch erzielen, dass das Aufzeichnungsmaterial mit elektromagnetischer Strahlung (Licht) im Wellenlängenbereich von Lasern bevorzugt zwischen 380 bis 420 nm, besonders bevorzugt zwischen 390 und 410 nm, ganz besonders bevozugt zwischen 395 und 405 nm behandelt wird.

Der Leseprozeß sollte im günstigsten mit Licht der selben Wellenlänge durchgeführt werden. Ist dies in manchen Fällen nicht möglich, so kann die Wellenlänge größer sein, wobei bevorzugt die Wellenlänge nur geringfügig größer sein soll.

Die Reorientierung der Farbstoffe nach der Belichtung mit aktinischem Licht resultiert beispielsweise aus Untersuchungen zur polarisierten Absorptionsspektroskopie: Eine zuvor mit aktinischem Licht belichtete Probe wird zwischen 2 Polarisatoren im UV-/VIS-Spektrometer (z.B. Firma CARY 4G, UV-/VIS Spektrometer) im Spektralbereich der Absorption der Farbstoffe untersucht. Beim Drehen der Probe um die Probennormale und geeigneter Polarisatorenstellung, beispielsweise im gekreuzten Zustand, folgt die Reorientierung der Farbstoffe aus dem Intensitätsverlauf der Extinktion als Funktion des Probenwinkels und ist dadurch eindeutig bestimmbar.

Ein wichtiger Parameter, der im folgenden noch öfter Bedeutung erlangt, ist die Orientierung der Moleküllängsachse. Die Moleküllängsachse kann beispielsweise anhand der Molekulargestalt durch molecular modelling (z. B. CERIUS$^2$) bestimmt werden.

Ein wichtiger Parameter für die erfindungsgemäßen Farbstoffe ist deren Empfindlichkeit auf aktinisches Licht nach dem Schreibvorgang.

Ein Maß für die Empfindlichkeit eines Moleküls auf das aktinische Licht ist beispielsweise die holographische Sensitivität. Sie errechnet sich beispielsweise aus der holographischen Wachstumskurve, also der Entwicklung der Beugungseffizienz (= abgebeugte Intensität bezogen auf einfallende Intensität des Leselasers) als Funktion der von den Schreibstrahlen deponierten Energie. Die Sensitivität ist definiert als Steigung der Wurzel der Beugungseffizienz nach der deponierten Energie, normiert auf die Dicke des Speichermediums.

Auf mikroskopischer Ebene bedeutet Empfindlichkeit die Wahrscheinlichkeit, dass ein Photon ein Molekül vom elektronischen Grundzustand in einen angeregten Zustand überführt, der in der Regel mit einer cis-Konfiguration beschrieben wird.

Der Farbstoff verringert sein Absorptionsverhalten, insbesondere seine Empfindlichkeit auf das aktinische Licht zum Beispiel dadurch, dass er in die Richtung senkrecht zur Polarisationsrichtung des aktinischen Lichtes klappt und seine Moleküllängsachse mit der Polarisationsrichtung des aktinischen Lichtes einen Winkel zwischen 10° und 90°, bevorzugt zwischen 50° und 90° besonders bevorzugt zwischen 75° und 90° und ganz besonders bevorzugt zwischen 85° und 90° zu liegen kommt. Derartige Farbstoffe stehen für weitere Schreibvorgänge dann nicht mehr zur Verfügung, wenn keine Komponente des Polarisierbarkeitstensors mehr mit dem aktinischen Licht wechselwirken kann und so beim erneuten Schreiben nach einem Löschvorgang der beim vorigen Schreiben erreichte Doppelbrechungswert nicht mehr erreicht wird. Derartige Farbstoffe sind beispielsweise dadurch gekennzeichnet, dass ihr Polarisierbarkeitstensor eine langgestreckte Form hat.

Es ist erfindungswesentlich, dass die Empfindlichkeit auf das aktinische Licht der erfindungsgemäßen Farbstoffe nach Einschreiben der induzierten Doppelbrechung auf einem endlichen Wert erhalten bleibt, und diese Empfindlichkeit bei mindestens 5 %, bevorzugt 10 %, besonders bevorzugt 15 %, ganz besonders bevorzugt 20 % des ursprünglichen Wertes liegt, wenn die Moleküllängsachse senkrecht zur Polarisationsrichtung des aktinischen Lichtes liegt.

Auf diese Weise ist eine mehrfache Wiederbeschreibung des Aufzeichnungsmaterials möglich: Der nach dem Löschvorgang erreichte lichtinduzierte Doppelbrechungswert erreicht einen Wert, der sich um höchstens 20 %, bevorzugt 10 %, besonders bevorzugt 5 % und ganz besonders bevorzugt um höchstens 1 % vom vorherigen Wert unterscheidet.

Unter mehrfacher Wiederbeschreibbarkeit versteht man, dass mindestens 2, bevorzugt mindestens 10, besonders bevorzugt mindestens 100 und ganz besonders bevorzugt mindestens 1000 Scheib-/Löschzyklen durchgeführt werden.

Bei der Gruppierung, die mit der elektromagnetischen Strahlung in Wechselwirkung tritt, handelt es sich um einen Azofarbstoff. Das erfindungsgemäße Material enthält folglich mindestens einen Azofarbstoff.

Azofarbstoffe haben beispielsweise die folgende Struktur der Formel (I)

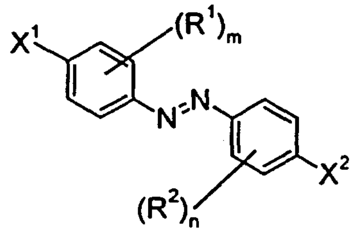

(I),

worin

R[1] und R[2] unabhängig voneinander für Wasserstoff oder einen nichtionischen Substituenten stehen und

m und n unabhängig voneinander für eine ganze Zahl von 0 bis 4, vorzugsweise 0 bis 2 stehen,

$X^1$ und $X^2$ bedeuten $-X^{1'}-R^3$ bzw. $X^{2'}-R^4$,

worin

$X^{1'}$ und $X^{2'}$ für eine direkte Bindung, -O-, -S-, $-(N-R^5)-$, $-C(R^6R^7)-$, -(C=O)-, -(CO-O)-, $-(CO-NR^5)-$, $-(SO_2)-$, $-(SO_2-O)-$, $-(SO_2-NR^5)-$, $-(C=NR^8)-$ oder $-(CNR^8-NR^5)-$ stehen,

$R^3$, $R^4$, $R^5$ und $R^8$ unabhängig voneinander für Wasserstoff, $C_1$- bis $C_{20}$-Alkyl, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_3$ bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-$(SO_2)$-, $C_3$- bis $C_{10}$-Cycloalkyl-$(SO_2)$-, $C_2$- bis $C_{20}$-Alkenyl-$(SO_2)$- oder $C_6$- bis $C_{10}$-Aryl-$(SO_2)$- stehen oder

$X^{1'}-R^3$ und $X^{2'}-R^4$ für Wasserstoff, Halogen, Cyan, Nitro, $CF_3$ oder $CCl_3$ stehen können,

$R^6$ und $R^7$ unabhängig voneinander für Wasserstoff, Halogen, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$ bis $C_{10}$-Aryl stehen.

Unter nichtionischen Substituenten sind zu verstehen Halogen, Cyano, Nitro, $C_1$- bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl oder $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-$(SO_2)$-, $C_1$- bis $C_{20}$Alkyl-(C=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$- bis $C_{20}$-Alkyl-NH-(C=O)- oder $C_6$- bis $C_{10}$-Aryl-NH-(C=O)-.

Die Alkyl-, Cycloalkyl-, Alkenyl- und Arylreste können ihrerseits durch bis zu 3 Reste aus der Reihe Halogen, Cyano, Nitro, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl substituiert sein und die Alkyl- und Alkenylreste können geradkettig oder verzweigt sein.

Unter Halogen ist Fluor, Chlor, Brom und Iod zu verstehen, insbesondere Fluor und Chlor.

Bei dem erfindungsgemäßen Aufzeichnungsmaterial handelt es sich bevorzugt um polymeres oder oligomeres organisches, amorphes Material besonders bevorzugt um ein Seitenkettenpolymer.

Die Hauptketten des Seitenkettenpolymeren entstammen den folgenden Grundstrukturen: Polyacrylat, Polymethacrylat, Polysiloxan, Polyharnstoff, Polyurethan, Polyester oder Zellulose. Bevorzugt sind Polyacrylat und Polymethacrylat.

Die Farbstoffe, insbesondere die Azofarbstoffe der Formel (I) sind an diese Polymergerüste kovalent gebunden, in der Regel über einen Spacer. Beispielsweise steht $X^1$ (oder $X^2$) dann für einen solchen Spacer, insbesondere in der Bedeutung $X^{1'}-(Q^1)_i-T^1-S^1-$,
wobei

$X^{1'}$ die oben angegebene Bedeutung besitzt,

$Q^1$ für -O-, -S-, $-(N-R^5)-$, $-C(R^6R^7)-$, -(C=O)-, -(CO-O)-, $-(CO-NR^5)-$, $-(SO_2)-$, $-(SO_2-O)-$, $-(SO_2-NR^5)-$, $-(C=NR^8)-$, $-(CNR^8-NR^5)-$, $-(CH_2)_p-$, p- oder m-$C_6H_4$- oder einen zweibindigen Rest der Formeln

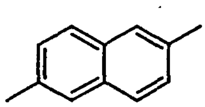 oder 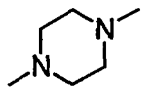

steht,

i — für eine ganze Zahl von 0 bis 4 steht, wobei für i > 1 die einzelnen $Q^1$ verschiedene Bedeutungen haben können,

$T^1$ — für $-(CH_2)_p-$ steht, wobei die Kette durch -O-, $-NR^9-$, oder $-OSiR^{10}{}_2O-$unterbrochen sein kann,

$S^1$ — für eine direkte Bindung, -O-, -S- oder $-NR^9-$ steht,

p — für eine ganze Zahl von 2 bis 12, vorzugsweise 2 bis 8, insbesondere 2 bis 4 steht,

$R^9$ — für Wasserstoff, Methyl, Ethyl oder Propyl steht,

$R^{10}$ — für Methyl oder Ethyl steht und

$R^5$ bis $R^8$ — die oben angegebene Bedeutung besitzen.

Bevorzugte Farbstoffmonomere für Polyacrylate oder -methacrylate haben dann die Formel (II)

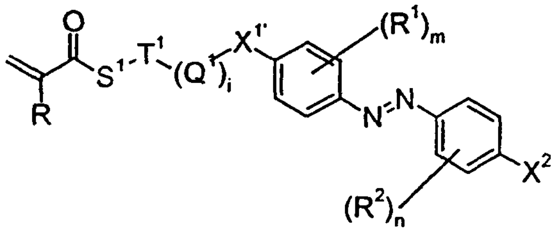

(II),

worin

R — für Wasserstoff oder Methyl steht und

die anderen Reste die oben angegebene Bedeutung besitzen.

Besonders geeignet sind Farbstoffmonomere der folgenden Formel (IIa)

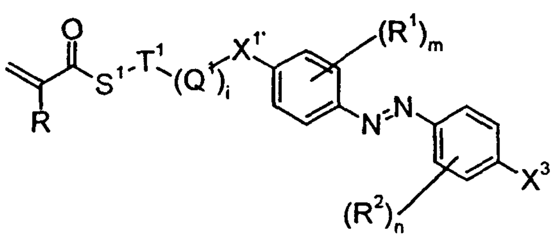

(IIa),

worin

$X^3$ CN, und alle anderen bekannten elektronenziehenden Substituenten bedeutet, und bevorzugt dann $R^1$ auch CN ist,

und die Reste R, $S^1$, $T^1$, $Q^1$, $X^{1'}$, und $R^2$ sowie i, m und n die oben angegebene Bedeutung haben.

Das erfindungsgemäße polymere oder oligomere organische, amorphe Material kann neben den Farbstoffen, beispielsweise der Formel (I), formanisotrope Gruppierungen tragen. Auch diese sind, in der Regel über einen Spacer, an die Polymergerüste kovalent gebunden.

Formanisotrope Gruppierungen haben beispielsweise die Struktur der Formel (III)

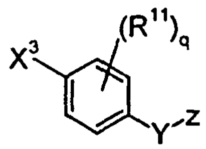

(III),

worin Z für einen Rest der Formeln

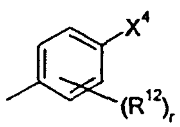

(IIIa)

oder

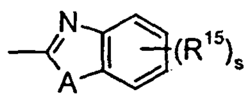

(IIIb)

steht, worin

| | |
|---|---|
| A | für O, S oder N-$C_1$- bis $C_4$-Alkyl steht, |
| $X^3$ | für -$X^{3'}$-$(Q^2)_j$-$T^2$-$S^2$- steht, |
| $X^4$ | für $X^{4'}$-$R^{13}$ steht, |
| $X^{3'}$ und $X^{4'}$ | unabhängig voneinander für eine direkte Bindung, -O-, -S-, -(N-$R^5$)-, -C($R^6R^7$)-, -(C=O)-, -(CO-O)-, -(CO-N$R^5$)-, -($SO_2$)-, -($SO_2$-O)-, -($SO_2$-N$R^5$)-, -(C=N$R^8$)- oder -(CN$R^8$-N$R^5$)- stehen, |
| $R^5$, $R^8$ und $R^{13}$ | unabhängig voneinander für Wasserstoff, $C_1$- bis $C_{20}$-Alkyl, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)- stehen oder |
| $X^{4'}$-$R^{13}$ | für Wasserstoff, Halogen, Cyan, Nitro, $CF_3$ oder $CCl_3$ stehen kann, |
| $R^6$ und $R^7$ | unabhängig voneinander für Wasserstoff, Halogen, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl stehen, |
| Y | für eine einfache Bindung, -COO-, OCO-, -CONH-, -NHCO-, -CON($CH_3$)-, -N($CH_3$)CO-, -O-, -NH- oder -N($CH_3$)- steht, |

| | |
|---|---|
| $R^{11}$, $R^{12}$, $R^{15}$ | unabhängig voneinander für Wasserstoff, Halogen, Cyano, Nitro, $C_1$- bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl oder $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Allyl-($SO_2$)-, $C_1$- bis $C_{20}$-Alkyl-(C=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$- bis $C_{20}$-Alkyl-NH-(C=O)- oder $C_6$ bis $C_{10}$-Aryl-NH-(C=O)- stehen, |
| q, r und s | unabhängig voneinander für eine ganze Zahl von 0 bis 4, vorzugsweise 0 bis 2 stehen, |
| $Q^2$ | für -O-, -S-, -(N-$R^5$)-, -C($R^6R^7$)-, -(C=O)-, -(CO-O)-, -(CO-N$R^5$)-, -($SO_2$)-, -($SO_2$-O)-, -($SO_2$-N$R^5$)-, -(C=N$R^8$)-, -(CN$R^8$-N$R^5$)-, -$(CH_2)_p$-, p- oder m-$C_6H_4$- oder einen zweibindigen Rest der Formeln |

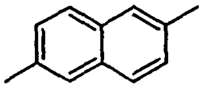 oder 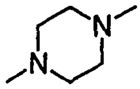

steht,

| | |
|---|---|
| j | für eine ganze Zahl von 0 bis 4 steht, wobei für j > 1 die einzelnen $Q^1$ verschiedene Bedeutungen haben können, |
| $T^2$ | für -$(CH_2)_p$- steht, wobei die Kette durch -O-, -N$R^9$-, oder -OSi$R^{10}{}_2$O-unterbrochen sein kann, |
| $S^2$ | für eine direkte Bindung, -O-, -S- oder -N$R^9$- steht, |
| p | für eine ganze Zahl von 2 bis 12, vorzugsweise 2 bis 8, insbesondere 2 bis 4 steht, |
| $R^9$ | für Wasserstoff, Methyl, Ethyl oder Propyl steht und |
| $R^{10}$ | für Methyl oder Ethyl steht. |

Bevorzugte Monomere mit solchen formanisotropen Gruppierungen für Polyacrylate oder -methacrylate haben dann die Formel (IV)

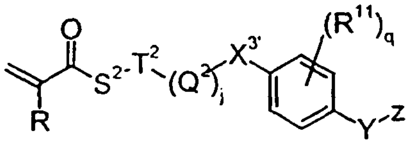 (IV),

worin

R für Wasserstoff oder Methyl steht und

die anderen Reste die oben angegebene Bedeutung besitzen.

Besonders bevorzugte formanisotrope Monomere der Formel (IV) sind beispielsweise:

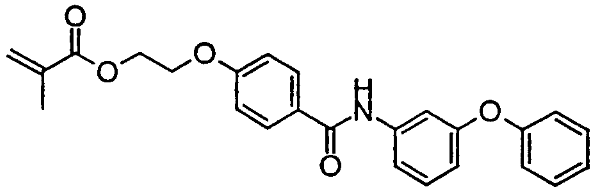

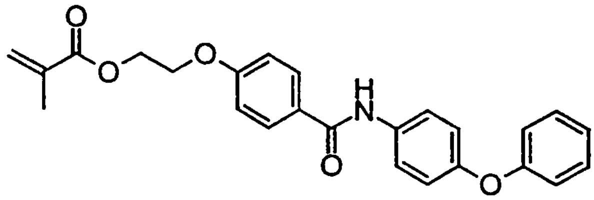

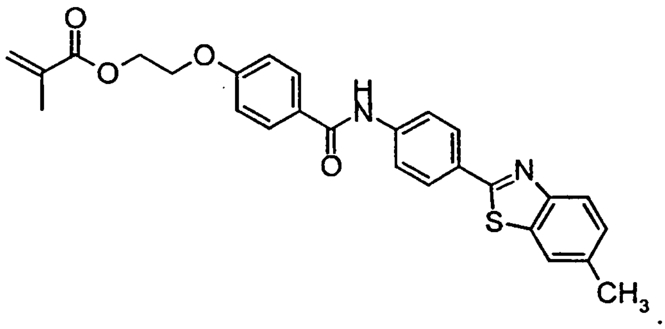

Die Alkyl-, Cycloalkyl-, Alkenyl- und Arylreste können ihrerseits durch bis zu 3 Reste aus der Reihe Halogen, Cyano, Nitro, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl substituiert sein und die Alkyl- und Alkenylreste können geradkettig oder verzweigt sein.

Unter Halogen ist Fluor, Chlor, Brom und Iod zu verstehen, insbesondere Fluor und Chlor.

Neben diesen funktionalen Bausteinen können die erfindungsgemäßen Oligo- oder Polymeren auch Bausteine enthalten, die hauptsächlich zur Erniedrigung des prozentualen Gehalts an funktionalen Bausteinen, insbesondere an Farbstoffbausteinen, dienen. Neben dieser Aufgabe können sie auch für andere Eigenschaften der Oligo- oder Polymeren verantwortlich sein, z. B. die Glasübergangstemperatur, Flüssigkristallinität, Filmbildungseigenschaft, usw.

Für Polyacrylate oder -methacrylate sind solche Monomeren Acryl- oder Methacrylsäureester der Formel (V)

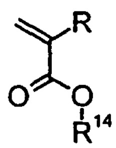

(V),

worin

R für Wasserstoff oder Methyl steht und

$R^{14}$ für gegebenenfalls verzweigtes $C_1$- bis $C_{20}$-Alkyl oder für einen wenigstens eine weitere Acryleinheit enthaltenden Rest steht.

Es können aber auch andere Copolymere enthalten sein.

Erfindungsgemäße Polyacrylate und Polymethacrylate enthalten dann vorzugsweise als wiederkehrende Einheiten solche der Formeln (VI), vorzugsweise solche der Formeln (VI) und (VII) oder der Formeln (VI) und (VIII) oder solche der Formeln (VI), (VII) und (VIII)

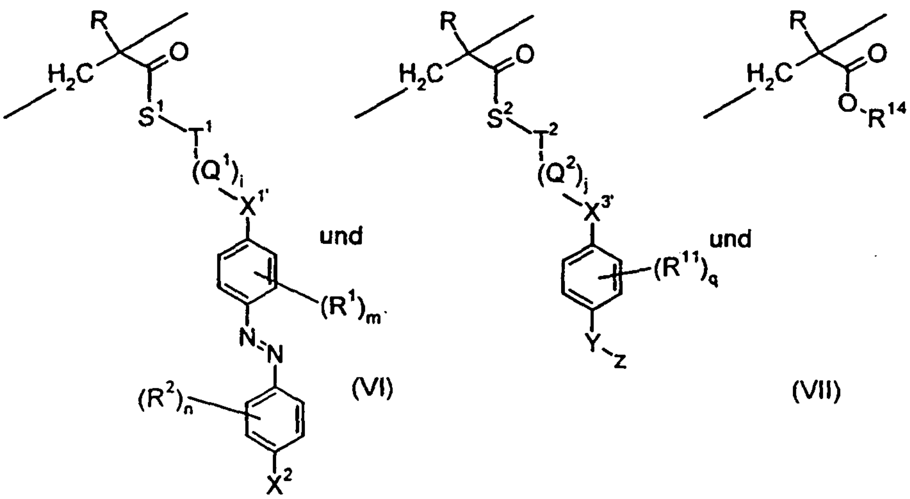

und (VI) und (VII) (VIII)

worin die Reste die oben angegebenen Bedeutungen besitzen.

Es können auch mehrere der wiederkehrenden Einheiten der Formel (VI) und/oder der wiederkehrenden Einheiten der Formeln (VII) und/oder (VIII) vorhanden sein.

Das Mengenverhältnis zwischen VI, VII und VIII ist beliebig. Bevorzugt beträgt die Konzentration von VI je nach Absorptionskoeffizienten von VI zwischen 0.1 und 100% bezogen auf das jeweilige Gemisch. Das Verhältnis zwischen VI und VII beträgt zwischen 100:0 und 1:99, bevorzugt zwischen 100:0 und 30:70, ganz besonders bevorzugt zwischen 100:0 und 50:50.

Die erfindungsgemäßen Polymeren und Oligomeren besitzen vorzugsweise Glasübergangstemperaturen $T_g$ von mindestens 40 °C. Die Glasübergangstemperatur kann beispeilsweise nach B. Vollmer, Grundriß der Makromolekularen Chemie, S. 406-410, Springer-Verlag, Heidelberg 1962, bestimmt werden.

Die erfindungsgemäßen Polymeren und Oligomeren besitzen eine als Gewichtsmittel bestimmtes Molekulargewicht von 5.000 bis 2.000.000, vorzugsweise von 8.000 bis 1.500.000, bestimmt durch Gelpermeationschromatographie (geeicht mit Polystyrol).

Durch die Struktur der Polymeren und Oligomeren werden die zwischenmolekularen Wechselwirkungen der Strukturelemente der Formeln (VI) untereinander oder der Formeln (VI) und (VII) untereinander so eingestellt, dass die Ausbildung flüssigkristalliner Ordnungszustände unterdrückt wird und optisch isotrope, transparente nichtstreuende Filme, Folien, Platten oder Quader hergestellt werden können. Andererseits sind die zwischenmolekularen Wechselwirkungen dennoch stark genug, dass bei Bestrahlung mit Licht ein photochemisch induzierter, kooperativer, gerichteter Umorientierungsprozeß der photochromen und der nicht photochromen Seitengruppen bewirkt wird.

Bevorzugt treten zwischen den Seitengruppen der wiederkehrenden Einheiten der Formel (VI) oder zwischen denen der Formeln (VI) und (VII) Wechselwirkungskräfte auf, die ausreichen, dass die photoinduzierte Konfigurationsänderung der Seitengruppen der Formel (VI) eine gleichgerichtete - sogenannte kooperative - Umorientierung der anderen Seitengruppen ((VI) und/oder (VII)) bewirkt.

In den optisch isotropen amorphen photochromen Polymeren können extrem hohe Werte der optischen Anisotropie induziert werden (Δn bis 0.4).

Durch den Einfluß von aktinischem Licht werden in den Polymeren oder Oligomeren Ordnungszustände generiert und modifiziert und damit die optischen Eigenschaften moduliert.

Als Licht wird polarisiertes Licht verwendet, dessen Wellenlänge im Bereich der Absorptionsbande, vorzugsweise im Bereich der langwelligen n-π*-Bande der wiederkehrenden Einheiten der Formel (VI) liegt.

Eine weitere Methode das Aufzeichnungsmaterial oder das erfindungsgemäße Polymer herzustellen enthält ein Verfahren, wobei mindestens ein Monomer ohne weiteres Lösungsmittel polymerisiert wird wobei bevorzugt radikalisch polymerisiert wird, und besonders bevorzugt durch radikalische Starter und/oder UV-Licht und/oder thermisch initiiert wird.

Man arbeitet bei Temperaturen zwischen 20°C und 200°C, bevorzugt zwischen 40°C und 150°C, besonders bevorzugt 50°C und 100°C und ganz besonders bevorzugt um 60°C.

In einer besonderen Ausführungsform wird als radikalischer Starter AIBN verwendet.

Oft hat es sich als günstig erwiesen, dass man ein weiteres, bevorzugt flüssiges Monomer mit einsetzt. Darunter werden bei den Reaktionstemperaturen flüssige Monomere verstanden, die bevorzugt olefinisch ungesättigte Monomere sind, besonders bevorzugt auf Basis der Acrylsäure und Methacrylsäure, ganz besonders bevorzugt Methylmethacrylat.

Der Anteil der Monomere der Formel (II) beträgt in den Copolymeren bevorzugt 0,1 bis 99,9 Gew.-%, besonders bevorzugt 0,1 bis 50 Gew.-%, ganz besonders bevorzugt 0,1 bis 5 Gew.-% und im günstigsten Fall 0,5 bis 2 Gew.-%.

Die erfindungsgemäßen Materialien enthalten mindestens eines der Polymere der Formel XIV, XV, XVI und XVIII

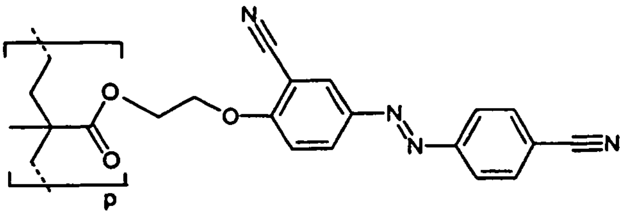

XIV

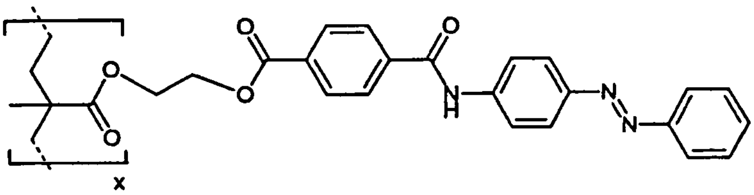

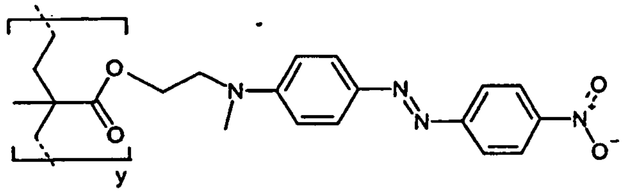

XV

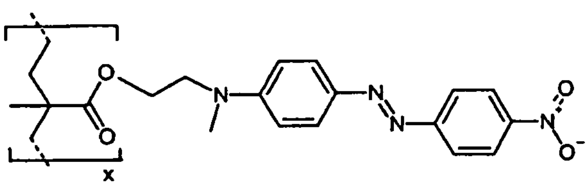

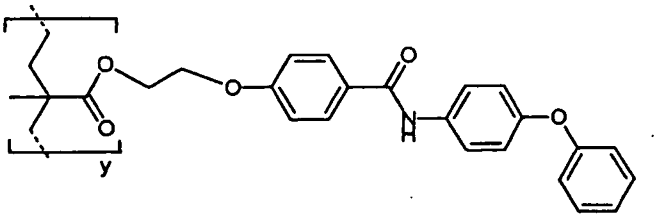

XVI

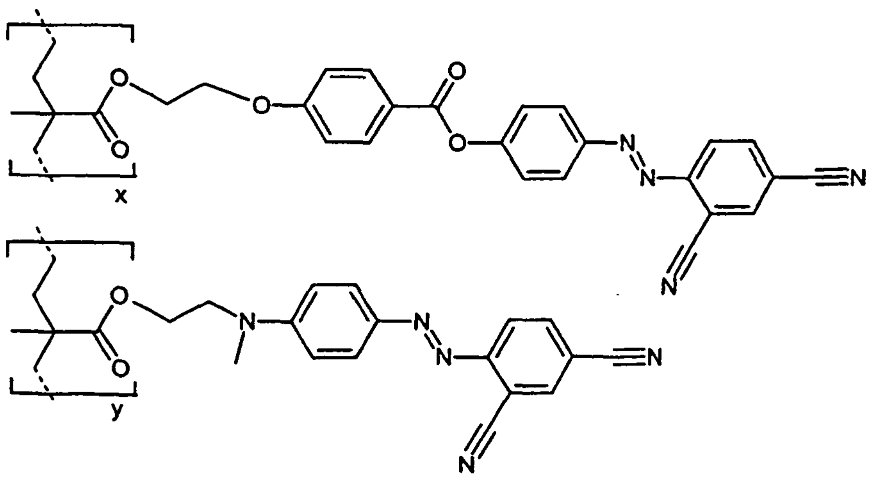

XVIII

Ein weiterer Gegenstand der Erfindung ist ein Herstellverfahren für geeignete Monomere, analog der Formel unter Beispiel 1.2.

Das Verfahren ist dadurch gekennzeichnet, dass Terephtalsäuredichlorid mit einem Aminoazobenzol oder einem substituierten Aminoazobenzol in mindestens equimolaren Mengen bei einer Temperatur zwischen Raumtemperatur und 110 °C in einem inerten Lösungsmittel, bspw. Dioxan, gerührt wird, wobei quantitativ das unsymmetrische Teilamid entsteht, welches sofort abgesaugt werden kann. Der Fachmann sieht sofort, dass natürlich auch substituierte Aminoazobenzole in Frage kommen. Gegebenenfalls wird nochmals mit dem Lösungsmittel gewaschen. Man erhält dann ein, ggf. substituiertes 4(Carboxychlorid)benzoesäure-(4'Phenylazo) benzamid.

Gegenstand der Erfindung ist auch ein solchermaßen hergestelltes unsymmetrisches Terephthalamid, sowie das, ggf. substituierte unsymmetrische Terephthalamid und das daraus gem. Beispiel 1.2 herstellbare Acrylat, bzw. Methacrylat.

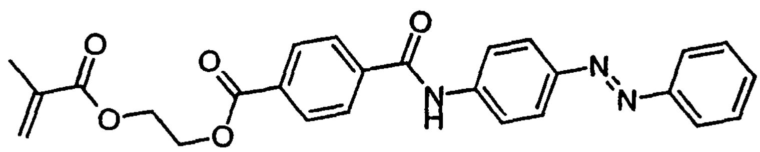

Gegenstand der Erfindung ist auch ein Monomer gem. Beispiel 1.3 der vorliegenden Anmeldung, welches natürlich auch substituiert hergestellt werden kann.

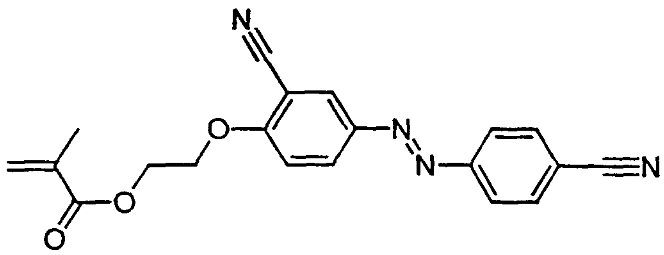

Die Herstellung von Filmen, Folien, Platten und Quadern gelingt, ohne dass aufwendige Orientierungsverfahren unter Nutzung externer Felder und/oder von Oberflächeneffekten notwendig sind. Sie lassen sich durch Spincoaten, Tauchen, Gießen oder andere technologisch leicht beherrschbare Beschichtungsverfahren auf Unterlagen aufbringen, durch Pressen oder Einfließen zwischen zwei transparente Platten bringen oder einfach als selbsttragendes Material durch Gießen oder Extrudieren präparieren. Solche Filme, Folien, Platten und Quader lassen sich durch schlagartiges Abkühlen, d. h. durch eine Abkühlungsrate von > 100 K/min, oder durch rasches Abziehen des Lösungsmittels auch aus flüssigkristallinen Polymeren oder Oligomeren herstellen, die Strukturelemente im beschriebenen Sinne enthalten.

Bevorzugte Herstellverfahren für Aufzeichnungsmaterialien für binäre und/oder Multibit- und/oder Volumendatenspeicherung enthalten einen Schritt, bei dem das Speichermedium durch Spincoating aufgebracht wird.

Bevorzugte Herstellungsverfahren für holographischer Volumenspeicher enthalten einen Schritt nach einem üblichen Spritzgußverfahren im Bereich bis 300°C, bevorzugt bis 220 °C, besonders bevorzugt 180°C.

Die Schichtdicke ist ≥ 0,1 mm, vorzugsweise ≥ 0,5 mm besonders bevorzugt ≥ 1 mm. Ein besonders bevorzugtes Präparationsverfahren für Schichten im Millimeterbereich stellt das Spritzgußverfahren dar. Hierbei wird die Polymerschmelze durch eine Düse in eine formgebende Halterung gepreßt, aus der sie nach dem Abkühlen entnommen werden kann.

**Beispiele:**

**Beispiel 1 Herstellung der Monomere**

**1.1.**

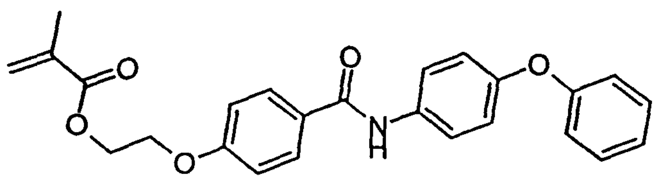

Zu einer Lösung von 125 g 4-(2-Methacryloyloxy)-ethoxy-benzoesäurechlorid in 200 ml Dioxan werden 85,9 g 4-Aminodiphenylether in 200 ml Dioxan gegeben, 2 h gerührt und das Produkt durch Eingießen der Lösung in 21 Wasser gefällt. Der Niederschlag wird abgesaugt, getrocknet und durch zweimaliges Umkristallisieren aus Isopropanol gereinigt. Die Ausbeute beträgt 80% d.Th. Fp. = 123°C

**1.2**

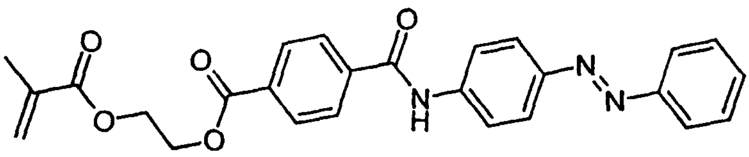

Zu einer Lösung von 203 g Terephthalsäuredichlorid in 1000 ml Dioxan werden 59 g 4-Aminoazobenzol in 400 ml Dioxan gegeben, 1 h gerührt. Der Niederschlag wird abgesaugt, mit Dioxan nachgewaschen und im Hochvakuum beil 10°C 8h getrocknet.. Die Ausbeute des 4(Carboxychlorid)benzoesäure-(4'Phenylazo) benzamids beträgt 92,8 g. Fp. = 123°C

| Elementaranalyse: $C_{20}H_{14}ClN_3O_2$ (363,81) | | | | |
|---|---|---|---|---|
| Ber.: | C66,03; | H3,88; | C19,75; | N11,55. |
| Gef.: | C66,10; | H4,00; | C19,70; | N11,70. |

Zu einer Lösung von 36,4 g dieser Substanz in 200 ml DMF werden 26 g 2-Hydroxyethylmethacrylat in 25 ml Pyridin gegeben, 2 h bei 100°C gerührt, und das Produkt durch Eingießen der Lösung in 11 Wasser gefällt. Der Niederschlag wird abgesaugt, getrocknet chromatographisch in Toluol/Ethylacetat(1:1) auf Kieselgel gereinigt Die Ausbeute beträgt 40% d.Th..

| Elementaranalyse: $C_{26}H_{23}N_3O_5$ (457,49) | | | |
|---|---|---|---|
| Ber.: | C68,26; | H5,07; | N9,18. |
| Gef.: | C68,00; | H5,10; | N9,20. |

1.3

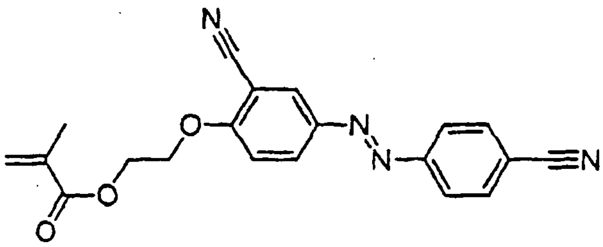

**- 4-Hydroxy- 3-Brom- 4'- Cyanoazobenzol**

18,8 g 4-Cyanoanilin werden in 100ml Wasser bei 60°C erhitzt. Zum Lösen gibt man 10 ml konz. Salzsäure dazu. Man gibt danach noch 115 ml Salzsäure zu, stellt die Temperatur der Lösung auf 0°C , tropft 52 g Nitrosylschwefelsäure langsam zu und läßt 1h rühren. Diese Lösung wird in einer Lösung aus 27,5 g 2-Bromphenol, 100 ml Methanol und 100 ml Wasser bei 10°C langsam zugetropft. Ein pH-Wert von 6 - 6,5 wird durch gleichzeitige Zugabe von 10%-ige Natronlauge gehalten. Nach vollständiger Zugabe läßt man die Rührmasse noch eine Stunde reagieren, saugt den Niederschlag ab. Anschließend wäscht man das Produkt mit Wasser und trocknet es. Die Ausbeute des 4-Hydroxy-3-Brom-4'-Cyanoazobenzols beträgt 68 g.

**- 4 (2-Hydroxyethyloxy)- 3-Brom- 4'- Cyanoazobenzol**

65 g 4-Hydroxy-3-Brom-4'-Cyanoazobenzol werden in 200 ml 4-Methyl-2-pentanon bei ca 120°C gelöst. In dieser Lösung gibt man 40 g 2-Bromethanol, 45 g Kaliumcarbonat und 0,5 g Kaliumiodid zu und läßt die Mischung bei

120°C 24 h rühren. Das Produkt wird in Chloroform aufgenommen und mit Wasser gewaschen. Nach dem Trocknen mit Magnesiumsulfat wird das Lösungsmittel einrotiert und der Rest chromatographisch auf Kieselgel in Toluol/Ethylacetat (4/1) gereinigt.

Die Ausbeute des 4(2-Hydroxyethyloxy)-3-Brom-4'-Cyanoazobenzols beträgt 30,7 g. Fp. = 153°C; $_{max}$=365 nm (DMF)

Elementaranalyse: $C_{15}H_{12}BrN_3O_2$ (346,19)

| | | | | |
|---|---|---|---|---|
| Ber.: | C52,04; | H3,49; | Br23,08; | N12,14. |
| Gef.: | C52,30; | H3,30; | Br22,90; | N12,10. |

- **4(2-Hydroxyethyloxy)-3,4'-Dicyanoazobenzol**

15 g 4(2-Hydroxyethyloxy)-3-Brom-4'-Cyanoazobenzol werden in 25 ml heißem DMF gelöst. Dann gibt man 4,3 g Kupfercyanid zu und läßt die Reaktionsmischung 5-6 Stunden bei 140°C rühren. Man gibt diese Lösung in ca. 500 ml einer 13%-igen wässrigen Ammoniaklösung und filtriert den Niederschlag ab. Der Niederschlag wird im heißen Dioxan gelöst. Die Lösung wird vom ungelösten Rest abfiltriert, das Dioxan wird einrotiert, das Produkt wird chromatographisch auf Kieselgel in Toluol/THF(1/2) gereinigt und einmal aus Ethanol umkristallisiert. Die Ausbeute des 4(2-Hydroxyethyloxy)-3,4'-Dicyanoazobenzols beträgt 4,5 g. Fp. = 138°C; $_{max}$=356 nm (DMF)

- **4 (2-Methacryloyloxyethyloxy)- 3,4'- Dicyanoazobenzol**

5,8 g 4(2-Hydroxy ethyloxy)-3,4'-Dicyanoazobenzol werden in 15 ml Dioxan bei 65°C gelöst; 2,4 g Triethylamin werden zugegeben. Man gibt eine Lösung von 3,1 g Methacrylsäurechlorid in 3 ml Dioxan zu, läßt die Reaktionsmischung 2 h bei 65°C ruhren und gibt danach in 350 ml Eiswasser. Man saugt den Niederschlag ab und trocknet es. Die Reinigung erfolgt chromatographisch auf Kieselgel in Toluol/THF(1/2). Die Ausbeute des 4(2-Methacryloyloxyethyloxy)-3,4'-Dicyanoazobenzols beträgt 5,9 g. Fp. = 110°C; $_{max}$=352 nm (DMF)

**<u>Beispiel 2 Herstellung der Polymere</u>**

3 g Monomer 1.2 und 0,15g 2,2' Azoisobuttersäuredinitril wurden in 30 ml DMF in der Argonatmosphäre 24 h bei 70°C gerührt. Das Polymer wird durch Eingießen der Lösung in 200 ml Wasser ausgefallen und durch Aufkochen in Methanol gereinigt.

**<u>Beispiel 3:</u>**

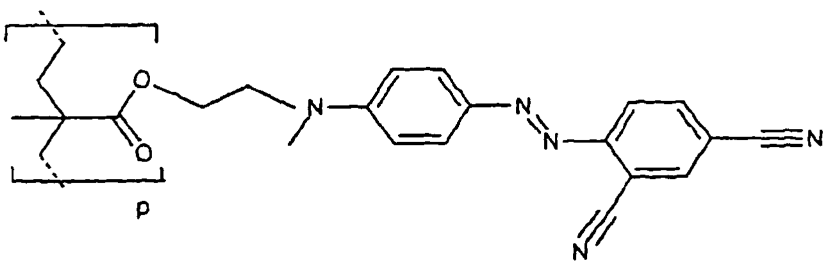

Ein 1mm dickes Glassubstrat wird mit einer dünnen Schicht des Polymers (siehe oben, Beispiel 3) versehen. Dies geschieht mit Hilfe der Drehschleudertechnik ("spin coating"). Dabei wird das Polymer bei einer Konzentration von 50 g/l in Tetrahydrofuran gelöst und die Lösung auf das sich mit einer Umdrehungszahl von 2000 $min^{-1}$ drehende Substrat aufgetropft. Der entstandene Polymerfilm hat typischerweise eine Dicke von 200 nm. Durch die Lagerung des beschichteten Glasträgers für 2 h bei 60°C im Vakuumofen werden Reste des Lösungsmittels aus dem Film entfernt.

Die so präparierte Probe wird von der Polymerseite mit polarisiertem Laserlicht in senkrechter Inzidenz bestrahlt (Schreibvorgang). Als Lichtquelle dient ein ArgonIonen-Laser (Firma Continuum) bei der Wellenlänge 514 nm. Die Intensität dieses sog. Schreiblasers beträgt 500 $mW/cm^2$. In den Seitengruppenmolekülen des Polymers werden trans-cis-trans-Isomerisierungszyklen induziert, was zu einem Aufbau einer Nettoorientierung der Moleküle weg von der Polarisationsrichtung des Ar-Lasers führt. Diese Moleküldynamik zeigt sich makroskopisch in einer sich ausbildenden Doppelbrechung $\Delta n=n_y-n_x$ in der Polymerfilmebene. Der Brechungsindex in Richtung der Polarisation des Laserlichts ($n_x$) sinkt bei diesem Prozeß, während der Brechungsindex senkrecht zur Polarisationsrichtung ($n_y$) anwächst. Die Dynamik läuft bei den gegebenen Belichtungsparametern im Minutenbereich ab.

Experimentell wird der zeitliche Verlauf der induzierten Doppelbrechung bei einer Wellenlänge von 633 nm mit einem Helium-Neon-Laser (typische Intensität: 10 mW/cm$^2$) bestimmt. Dieser Vorgang heißt Auslesen der Doppelbrechung. Das auf die Polymerschicht einfallende Licht dieses sog. Leselasers nimmt einen festen Winkel zwischen 15° und 35° zur Normalen der Schicht ein. Lese- und Schreiblicht überlappen auf der Polymerschicht. Die Polarisationsrichtung des Leselichts nimmt in der Polymerfilmebene einen Winkel von 45° zur Polarisation des Schreiblichts ein. Sie wird beim Durchlaufen der Polymerschicht gedreht, sofern die Schicht doppelbrechend ist. Diese Drehung geht einher mit einem Anwachsen der Leselichtintensität $I_s$ nach einem Analysator, der nach der Probe im Strahlengang steht und Licht senkrecht zur ursprünglichen Polarisationsrichtung durchläßt . In gleichem Maß, wie $I_s$ ansteigt, nimmt die intensität $I_p$ ab. $I_p$ ist definiert als die transmittierte Intensität nach einem ebenso positionierten Analysator, der aber die ursprüngliche Polarisationsrichtung des Leselasers selektiert. Experimentell werden die beiden Anteile der Polarisationsrichtung parallel und senkrecht zur ursprünglichen Richtung über einen polarisierenden Strahlteiler getrennt und mit Hilfe zweier Si-Photodioden detektiert. Die Doppelbrechung $\Delta n$ errechnet sich über folgende Relation aus den gemessenen Intensitäten:

$$\Delta n = \frac{\lambda}{\pi d} \arcsin \sqrt{\frac{I_s}{I_s + I_p}}$$

wobei d die Dicke der Polymerschicht und $\lambda$ = 633 nm die Lichtwellenlänge des Leselasers bezeichnet. In dieser Formel wird näherungsweise angenonmmen, dass senkrecht zur Polymerschicht ausgelesen wird.

Abb. 1 zeigt den monotonen zeitlichen Anstieg der Doppelbrechung $\Delta n$ einer Schicht des Polymers aus Beispiel 3 bei Schreib-/Löschexperimenten.. Ein hoher Doppelbrechungswert zeigt eine hohe Anisotropie in der Orientierungsverteilung der Chromophore in der Filmebene an. Nach 2-minütiger Belichtung der Probe durch den Schreiblaser wird der erste Schreibvorgang abgeschlossen. Die resultierende Phasenverschiebung $\Delta\phi = 2\pi\, \Delta n\, d / \lambda$ überschreitet während dieses und der folgenden Schreibvorgänge den Wert $\Delta\phi = \pi$ nicht. Die Doppelbrechung n der Polymerschicht hat nach 2 min nahezu einen Maximalwert von $\Delta n = 0{,}213 \pm 0{,}002$ erreicht.

$\Delta n$ wird durch Drehen der Polarisationsrichtung des Schreiblichts um 90° gelöscht. Dieser Löschvorgang ist abgeschlossen, sobald gilt: $\Delta n=0$. Dies ist gleichbedeutend mit einem Wert $I_s=0$, der über eine Diode detektiert wird. Das Löschen geschieht hier deutlich schneller als das Schreiben.

Weitere Schreib-/Löschvorgänge werden nach gleichem Muster direkt an diesen ersten angeschlossen, die Diodensignale aufgezeichnet und die Doppelbrechung errechnet. Es ist in Abb. 1 zu erkennen, dass der Aufbau der Doppelbrechung bei dem zweiten und allen folgenden Schreibvorgängen von der Geschwindigkeit und der Höhe im Rahmen der Meßgenauigkeit vergleichbar ist. Das Polymer bleicht also nicht aus, was an einer sukzessiven Abnahme der Doppelbrechung abzulesen wäre.

## Patentansprüche

1. Optisches Aufzeichnungsmaterial für binäre und/oder Multibit- und/oder Volumendatenspeicherung, enthaltend mindestens einen, bei Bestrahlung durch polarisierte elektromagnetische Strahlung seine räumliche Anordnung verändernden polymeren oder oligomeren Azofarbstoff, mindestens eine formanisotrope Gruppierung für Polyacrylate oder -methacrylate der Formel (IV)

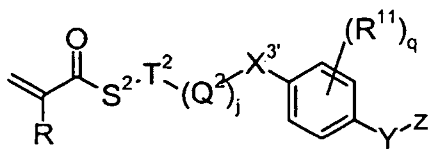

(IV),

worin

R für Wasserstoff oder Methyl steht,
$X^{3'}$, $X^{4'}$ unabhängig voneinander für eine direkte Bindung, -O-, -S-, -(N-$R^5$)-, -C($R^6R^7$)-, -(C=O)-, -(CO-O)-, -(CO-$NR^5$)-, -($SO_2$)-, -($SO_2$-O)-, -($SO_2$-$NR^5$)-, -(C=$NR^8$)- oder -(C$NR^8$-$NR^5$)- stehen,
$R^5$, $R^8$, $R^{13}$ unabhängig voneinander für Wasserstoff, $C_1$- bis $C_{20}$-Alkyl, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)- stehen oder
$R^6$, $R^7$ unabhängig voneinander für Wasserstoff, Halogen, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl stehen,
Y für eine einfache Bindung, -COO-, OCO-, -CONH-, -NHCO-, -CON($CH_3$)-, -N($CH_3$)CO-, -O-, -NH- oder -N($CH_3$)- steht,
Z für einen Rest der Formel

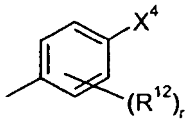

(IIIa)

oder

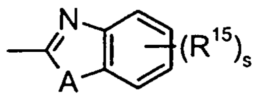

(IIIb)

steht,
worin

A für O, S oder N-$C_1$- bis $C_4$-Alkyl steht,
$X^4$ für $X^{4'}$-$R^{13}$ steht,
$R^{11}$, $R^{12}$, $R^{15}$ unabhängig voneinander für Wasserstoff, Halogen, Cyano, Nitro, $C_1$- bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl oder $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-($SO_2$)-, $C_1$-bis $C_{20}$-Alkyl-(C=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$- bis $C_{20}$-Alkyl-NH-(C=O)- oder $C_6$- bis $C_{10}$-Aryl-N-H-(C=O)- stehen,
q, r, s unabhängig voneinander für eine ganze Zahl von 0 bis 4, vorzugsweise 0 bis 2 stehen,
$Q^2$ für -O-, -S-, -(N-$R^5$)-, -C($R^6R^7$)-, -(C=O)-, -(CO-O)-, -(CO-$NR^5$)-, -($SO_2$)-, -($SO_2$-O)-, -($SO_2$-$NR^5$)-, -(C=$NR^8$)-, -(C$NR^8$-$NR^5$)-, -$(CH_2)_p$-, p- oder m-$C_6H_4$- oder einen zweibindigen Rest der Formeln

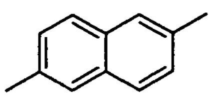

oder

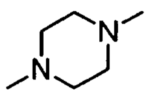

steht,

j für eine ganze Zahl von 0 bis 4 steht, wobei für j > 1 die einzelnen $Q^1$ verschiedene Bedeutungen haben können,
p für eine ganze Zahl von 2 bis 12, vorzugsweise 2 bis 8, insbesondere 2 bis 4 steht,
$T^2$ für -$(CH_2)_p$- steht, wobei die Kette durch -O-, -$NR^9$-, oder -$OSiR^{10}{}_2O$-unterbrochen sein kann,
$S^2$ für eine direkte Bindung, -O-, -S- oder -$NR^9$- steht,

$R^9$ für Wasserstoff, Methyl, Ethyl oder Propyl steht und
$R^{10}$ für Methyl oder Ethyl steht,

und Acryl- oder Methacrylsäureester der Formel (V)

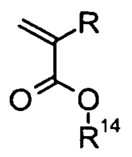

(V),

worin

R für Wasserstoff oder Methyl steht und
$R^{14}$ für, gegebenenfalls verzweigtes, $C_1$- bis $C_{20}$-Alkyl oder für einen wenigstens eine weitere Acryleinheit enthaltenden Rest steht,

**dadurch gekennzeichnet, dass**

- das Absorptionsmaximum des Farbstoffs wenigstens 30 nm, bevorzugt 40 nm, von 400 nm verschieden ist und
- der Farbstoff bei 400 nm eine optische Dichte von höchstens 60 % seines Absorptionsmaximums erreicht und
- eine Wiederbeschreibbarkeit durch Änderung des Polarisationszustandes des aktinischen Lichtes vorliegt, wobei nach einem Lösch-/Wiederschreib-Cyclus eine Intensität von mindestens 80 % des ursprünglichen Wertes erreicht wird, und
- wobei der Schreibvorgang bei sonst gleichen Bedingungen bei 400 nm nicht langsamer abläuft als bei 500 nm und die dabei induzierten Doppelbrechungswerte sich nicht um mehr als 10% von denen bei 500 nm induzierten Doppelbrechungswerten unterscheiden und
- die Schichtdicke ≥ 1 mm beträgt und
- im Feststoff bei einer Dicke von 250 nm die optische Dichte ≤ 1 bei einer Wellenlänge im Bereich von 380 bis 420 nm,

wobei mindestens eines der Polymere der folgenden Formeln enthalten ist:

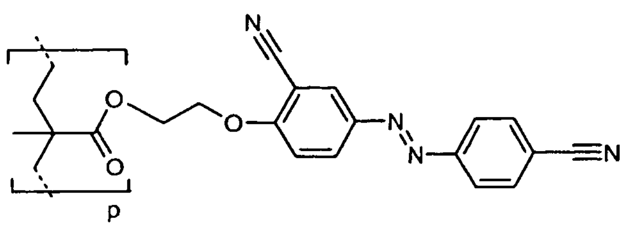

XIV

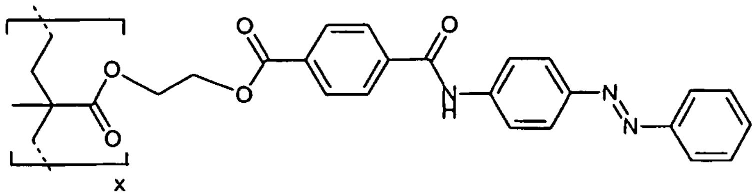

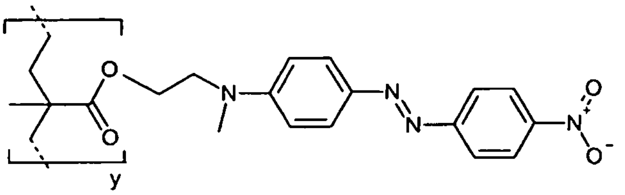

XV

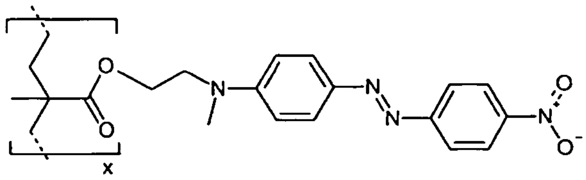

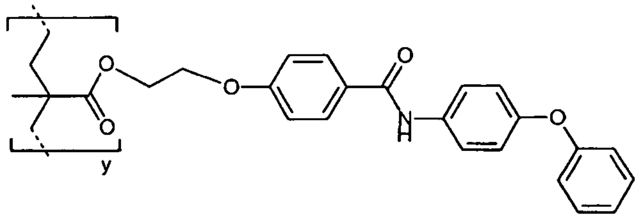

XVI

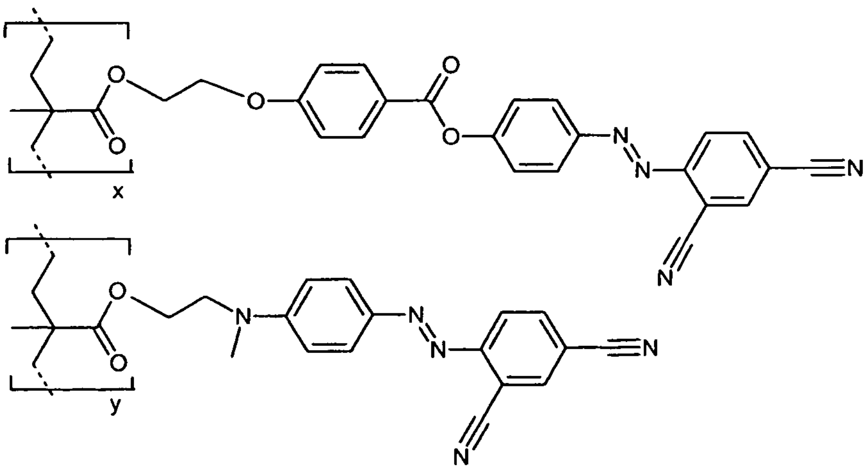

XVIII

wobei bei den Co- und Terpolymeren die Zusammensetzungen variieren können, unter der Maßgabe, dass sich x + y zu 100 mol-% , bzw. x + y + z zu 100 mol % ergänzen und p zwischen 10 und 1000 liegt.

2. Aufzeichnungsmaterial gemäß Anspruch 1, **dadurch gekennzeichnet, dass** das Absorptionsmaximum (AM) des Farbstoffs kleiner als 370 nm, bevorzugt 360 nm ist.

3. Aufzeichnungsmaterial gemäß Anspruch 1, **dadurch gekennzeichnet, dass** das Absorptionsmaximum des Farbstoffs größer als 450 nm ist.

4. Aufzeichnungsmaterial gemäß Anspruch 1, **dadurch gekennzeichnet, dass** ein Copolymer enthalten ist, das

mindestens eine Komponente enthält deren AM größer als 450 nm, mindestens eine Komponente enthält, deren AM kleiner als 360 nm ist.

5. Aufzeichnungsmaterial gemäß einem oder mehrerer der Ansprüche 1 bis 4, **dadurch gekennzeichnet, dass** es sich bei der elektromagnetischen Strahlung um Licht im Wellenlängenbereich von Laser bevorzugt zwischen 380 bis 420 nm, besonders bevorzugt zwischen 390 und 410 nm, ganz besonders bevozugt zwischen 395 und 405 nm.

6. Aufzeichnungsmaterial gemäß einem oder mehrerer der Ansprüche 1 bis 5, **dadurch gekennzeichnet, dass** im Falle der Copolymere x:y zwischen 10:90 und 90:10 liegt, bevorzugt zwischen 30:70, besonders bevorzugt zwischen 40:60 und 60:40 und ganz besonders bevorzugt bei 50:50 und/oder im Falle der Terpolymere x+y größer als 10 mol-% sind, bevorzugt größer als 20 mol-%, besonders bevorzugt größer als 30 mol-% sind.

7. Speicher, **dadurch gekennzeichnet, dass** ein Aufzeichnungsmaterial gemäß Ansprüchen 1 bis 6 enthalten ist.

8. Speicher nach Anspruch 7, **dadurch gekennzeichnet, dass** das Aufzeichnungsmaterial einen oder mehrere freitragende Gegenstände beliebiger Form, bevorzugt ein freitragendes flächenhaftes Gebilde, besonders bevorzugt einen freitragenden Film enthält, wobei in einem Vielschichtaufbau, bevorzugt mindestens eine Substratschicht enthalten ist.

9. Speicher nach Anspruch 8, **dadurch gekennzeichnet, dass** zusätzlich noch eine Reflektionsschicht enthalten ist.

10. Verfahren zur Herstellung des Speicher nach mindestens einem der Ansprüche 7 bis 9, **dadurch gekennzeichnet, dass** ein Schritt enthalten ist, bei dem das Speichermedium durch Spincoating aufgebracht wird.

**Claims**

1. Optical recording material for storing binary and/or multi-bit and/or volume data, containing at least one polymeric or oligomeric azo dye, the spatial arrangement of which is modified when irradiated with polarised electromagnetic radiation, at least one shape-anisotropic grouping for polyacrylates or polymethacrylates having the formula (IV)

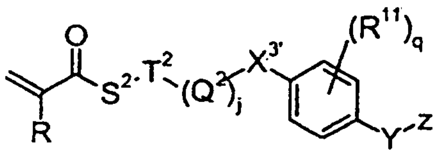

(IV),

wherein

R stands for hydrogen or methyl
$X^{3'}$, $X^{4'}$ mutually independently stand for a direct bond, -O-, -S-, -(N-$R^5$)-, -C($R^6R^7$)-, (C=O) -, -(CO-O)-, (CO-$NR^5$)-, -($SO_2$)-, ($SO_2$-O)-, -($SO_2$-$NR^5$)- , -(C=$NR^8$)- or -($CNR^8$-$NR^5$)-,
$R^5$, $R^8$, $R^{13}$ mutually independently stand for hydrogen, $C_1$ to $C_{20}$ alkyl, $C_3$ to $C_{10}$ cycloalkyl, $C_2$ to $C_{20}$ alkenyl, $C_6$ to $C_{10}$ aryl, $C_1$ to $C_{20}$ alkyl- (C=O) -, $C_3$ to $C_{10}$ cycloalkyl-(C=O)-, $C_2$ to $C_{20}$ alkenyl-(C=O)-, $C_6$ to $C_{10}$ aryl-(C=O)-, $C_1$ to $C_{20}$ alkyl-($SO_2$)-, $C_3$ to $C_{10}$ cycloalkyl-($SO_2$)-, $C_2$ to $C_{20}$ alkenyl-($SO_2$)- or $C_6$ to $C_{10}$ aryl-($SO_2$) or
$R^6$, $R^7$ mutually independently stand for hydrogen, halogen, $C_1$ to $C_{20}$ alkyl, $C_1$ to $C_{20}$ alkoxy, $C_3$ to $C_{10}$ cycloalkyl, $C_2$ to $C_{20}$ alkenyl or $C_6$ to $C_{10}$ aryl,
Y stands for a single bond, -COO-, OCO-, -CONH-, -NHCO-, -CON($CH_3$)-, -N($CH_3$)CO-, -O-, -NH- or -N($CH_3$)-,
Z stands for a radical having the formula

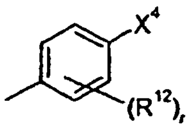

(IIIa)

or

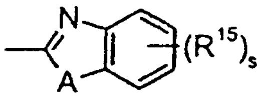

(IIIb),

wherein

A stands for O, S or N-$C_1$ to $C_4$ alkyl,
$X^4$ stands for $X^{4'}$-$R^{13}$,
$R^{11}$, $R^{12}$, $R^{15}$ mutually independently stand for hydrogen, halogen, cyano, nitro, $C_1$ to $C_{20}$ alkyl, $C_1$ to $C_{20}$ alkoxy, phenoxy, $C_3$ to $C_{10}$ cycloalkyl, $C_2$ to $C_{20}$ alkenyl or $C_6$ to $C_{10}$ aryl, $C_1$ to $C_{20}$ alkyl-(C=O)-, $C_6$ to $C_{10}$ aryl-(C=O)-, $C_1$ to $C_{20}$ alkyl-($SO_2$)-, $C_1$ to $C_{20}$ alkyl-(C=O)-O-, $C_1$ to $C_{20}$ alkyl-(C=O)-NH-, $C_6$ to $C_{10}$ aryl-(C=O)-NH-, $C_1$ to $C_{20}$ alkyl-O-(C=O)-, $C_1$ to $C_{20}$ alkyl-NH-(C=O)- or $C_6$ to $C_{10}$ aryl -NH-(C=O)-,
q, r, s mutually independently stand for a whole number from 0 to 4, preferably 0 to 2,
$Q^2$ stands for -O-, -S-, -(N-$R^5$)-, -C($R^6R^7$)-, -(C=O)-, -(CO-O)-, -(CO-$NR^5$)-, -($SO_2$)-, -($SO_2$-O)-, -($SO_2$-$NR^5$)-, -(C=$NR^8$)-, -(C$NR^8$-$NR^5$)-, -$(CH_2)_p$-, p- or m-$C_6H_4$- or a divalent radical having the formulae

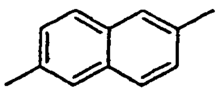

or

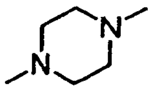

j stands for a whole number from 0 to 4, wherein if j > 1, the individual $Q^1$s can have different meanings,
p stands for a whole number from 2 to 12, preferably 2 to 8, in particular 2 to 4,
$T^2$ stands for -$(CH_2)_p$-, wherein the chain can be interrupted by -O-, -$NR^9$-, or -$OSiR^{10}{}_2O$-,
$S^2$ stands for a direct bond, -O-, -S- or -$NR^9$-,
$R^9$ stands for hydrogen, methyl, ethyl or propyl and
$R^{10}$ stands for methyl or ethyl,

and acrylic or methacrylic acid esters having the formula (V)

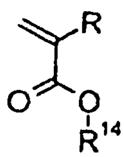

(V),

wherein

R stands for hydrogen or methyl and
$R^{14}$ stands for optionally branched, $C_1$ to $C_{20}$ alkyl or for a radical containing at least one further acrylic unit,

**characterised in that**

- the absorption maximum of the dye differs from 400 nm by at least 30 nm, preferably 40 nm, and
- at 400 nm the dye reaches an optical density of at most 60% of its absorption maximum, and
- an erasability exists by changing the polarisation state of the actinic light, wherein after an erase/rewrite cycle an intensity of at least 80% of the original value is achieved, and
- wherein under otherwise identical conditions the write process proceeds no more slowly at 400 nm than it does at 500 nm and the double refraction values induced at this wavelength differ from the double refraction values induced at 500 nm by no more than 10%, and
- the coating thickness is ≥ 1 mm and
- in a solid having a thickness of 250 nm the optical density is ≤ 1 at a wavelength in the range from 380 to 420 nm,

wherein at least one of the polymers having the following formulae is included:

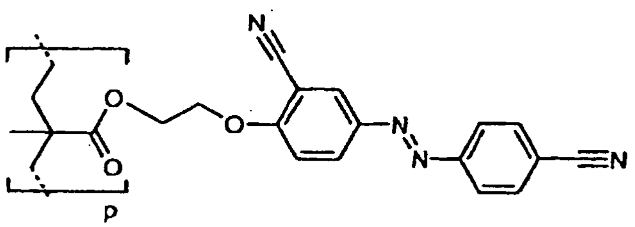

XIV

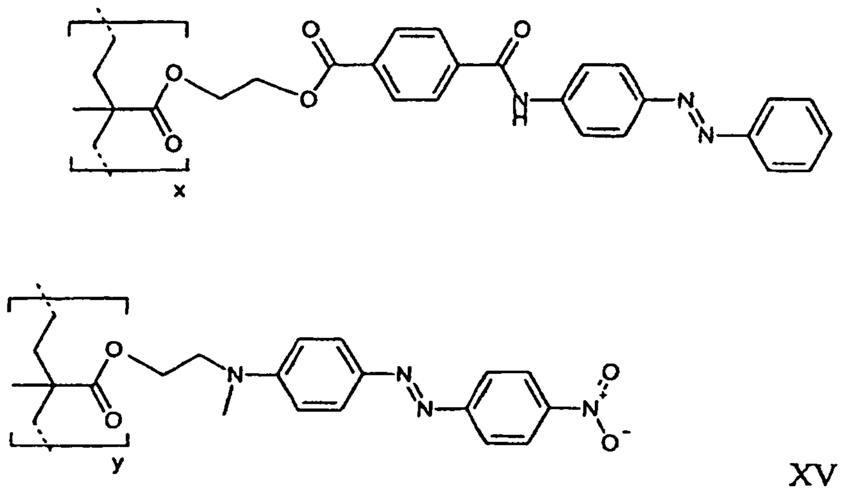

XV

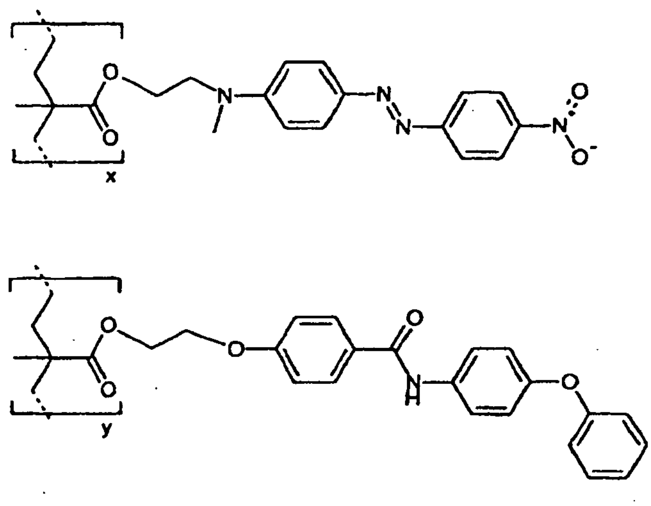

XVI

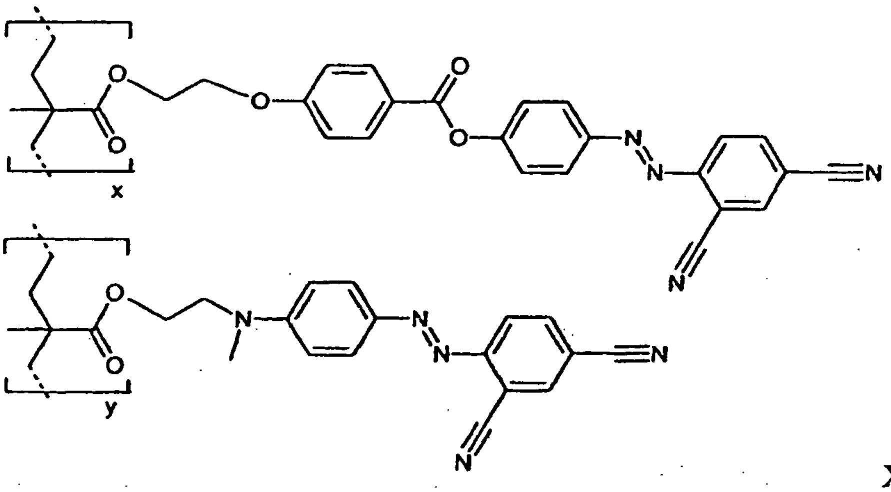

XVIII

wherein in the case of the copolymers and terpolymers the compositions can vary, provided that x + y add to 100 mol% or x + y + z add to 100 mol% and p is between 10 and 1000.

2. Recording material according to claim 1, **characterised in that** the absorption maximum (AM) of the dye is less than 370 nm, preferably 360 nm.

3. Recording material according to claim 1, **characterised in that** the absorption maximum of the dye is greater than 450 nm.

4. Recording material according to claim 1, **characterised in that** a copolymer is included which contains at least one component whose AM is greater than 450 nm and at least one component whose AM is less than 360 nm.

5. Recording material according to one or more of claims 1 to 4, **characterised in that** the electromagnetic radiation is light in the laser wavelength range, preferably between 380 and 420 nm, particularly preferably between 390 and 410 nm, most particularly preferably between 395 and 405 nm.

6. Recording material according to one or more of claims 1 to 5, **characterised in that** in the case of copolymers x: y is between 10:90 and 90:10, preferably between 30:70, particularly preferably between 40:60 and 60:40 and most

particularly preferably 50:50 and/or in the case of terpolymers x+y is greater than 10 mol%, preferably greater than 20 mol%, particularly preferably greater than 30 mol%.

**7.** Storage device, **characterised in that** it contains a recording material according to claims 1 to 6.

**8.** Storage device according to claim 7, **characterised in that** the recording material contains one or more self-supporting objects in any form, preferably a self-supporting laminar structure, particularly preferably a self-supporting film, wherein in a multi-layer construction there is preferably at least one substrate layer.

**9.** Storage device according to claim 8, **characterised in that** in addition a reflective layer is also included.

**10.** Process for producing the storage device according to at least one of claims 7 to 9, **characterised in that** it includes a step in which the storage medium is applied by spin coating.

## Revendications

**1.** Matériau d'enregistrement optique pour enregistrement de données binaires et/ou multibit et/ou en volume, contenant au moins un colorant azoïque polymère ou oligomère dont la disposition spatiale change à l'irradiation par un rayonnement électromagnétique polarisé, au moins un groupement formanisotrope pour polyacrylates ou polyméthacrylates de formule IV

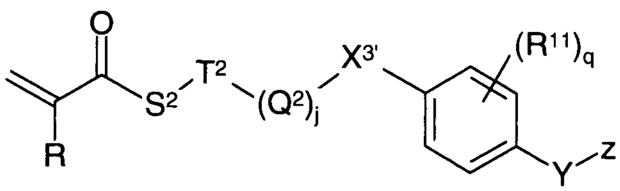

(IV),

dans laquelle

R représente l'hydrogène ou un groupe méthyle,
$X^{3'}$, $X^{4'}$ représentent chacun, indépendamment l'un de l'autre, une liaison directe, -O-, -S-, -(N-$R^5$)-, -C($R^6R^7$)-, -(C=O)-, -(CO-O)-, -(CO-N$R^5$)-, -($SO_2$)-, -($SO_2$-O)-, -($SO_2$-N$R^5$)-, -(C=N$R^8$)- ou -(CN$R^8$-N$R^5$)-,
$R^5$, $R^8$, $R^{13}$ représentent chacun, indépendamment les uns des autres, l'hydrogène, un groupe alkyle en $C_1$-$C_{20}$, cycloalkyle en $C_3$-$C_{10}$, alcényle en $C_2$-$C_{20}$, aryle en $C_6$-$C_{10}$, (alkyle en $C_1$-$C_{20}$)-(C=O)-, (cycloalkyle en $C_3$-$C_{10}$)-(C=O)-, (alcényle en $C_2$-$C_{20}$)-(C=O)-, (aryle en $C_6$-$C_{10}$)-(C=O)-, (alkyle en $C_1$-$C_{20}$)-$SO_2$-, (cycloalkyle en $C_3$-$C_{10}$)-$SO_2$-, (alcényle en $C_2$-$C_{20}$)-$SO_2$- ou (aryle en $C_6$-$C_{10}$)-$SO_2$- ou bien
$R^6$, $R^7$ représentent chacun, indépendamment l'un de l'autre, l'hydrogène, un halogène, un groupe alkyle en $C_1$-$C_{20}$, alcoxy en $C_1$-$C_{20}$, cycloalkyle en $C_3$-$C_{10}$, alcényle en $C_2$-$C_{20}$ ou aryle en $C_6$-$C_{10}$,
Y représente une liaison simple, un groupe -COO-, OCO-, -CONH-, -NHCO-, -CON($CH_3$)-, -N($CH_3$)CO-, -O-, -NH- ou -N($CH_3$)-,
Z représente un groupe de formule

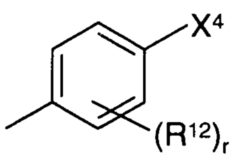

(IIIa)

ou

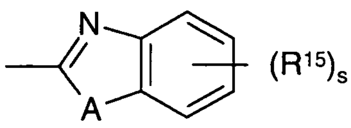 (IIIb),

dans laquelle

A représente 0, S ou un groupe N-alkyle en $C_1$-$C_4$,
$X^4$ représente $X^{4'}$-$R^{13}$,
$R^{11}$, $R^{12}$, $R^{15}$ représentent chacun, indépendamment les uns des autres, l'hydrogène, un halogène, un groupe cyano, nitro, alkyle en $C_1$-$C_{20}$, alcoxy en $C_1$-$C_{20}$, phénoxy, cycloalkyle en $C_3$-$C_{10}$, alcényle en $C_2$-$C_{20}$ ou aryle en $C_6$-$C_{10}$, (alkyle en $C_1$-$C_{20}$)-(C=O)-, (aryle en $C_6$-$C_{10}$)-(C=O), (alkyle en $C_1$-$C_{20}$)-$SO_2$-, (alkyle en $C_{1-}C_{20}$)-(C=O)-O-, (alkyle en $C_1$-$C_{20}$)-(C=O)-NH-, (aryle en $C_6$-$C_{10}$)-(C=O)-NH-, (alkyle en $C_1$-$C_{20}$)-O-(C=O)-, (alkyle en $C_1$-$C_{20}$)-NH-(C=O)- ou (aryle en $C_6$-$C_{10}$)-NH-(C=O)-,
q, r, s sont égaux chacun, indépendamment les uns des autres, à un nombre entier allant de 0 à 4, de préférence de 0 à 2,
$Q^2$ représente -O-, -S-, -(N-$R^5$)-, -C($R^6R^7$)-, -(C=O)-, -(CO-O)-, -(CO-N$R^5$)-, -($SO_2$)-, -($SO_2$-O)-, -($SO_2$-N$R^5$)-, -(C=N$R^8$)-, -(CN$R^{8-}$N$R^5$)-, -$(CH_2)_p$-, p- ou m-$C_6H_4$- ou un groupe bivalent de formule

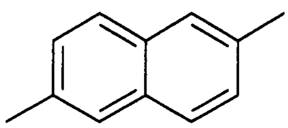 ou 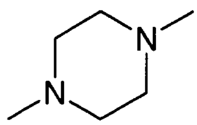

j est un nombre entier allant de 0 à 4, les divers symboles $Q^1$ pouvant avoir des significations différentes lorsque j > 1,
p est un nombre entier allant de 2 à 12, de préférence de 2 à 8, et plus spécialement de 2 à 4,
$T^2$ représente -$(CH_2)_p$-, la chaîne pouvant être interrompue par -O-, -N$R^9$- ou -OSi$R^{10}{}_2$O-,
$S^2$ représente une liaison directe, -O-, -S- ou -N$R^9$-,
$R^9$ représente l'hydrogène, un groupe méthyle, éthyle ou propyle et
$R^{10}$ représente un groupe méthyle ou éthyle,

et des esters acryliques ou méthacryliques de formule (V)

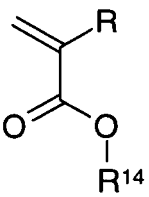 (V),

dans laquelle

R représente l'hydrogène ou un groupe méthyle et
$R^{14}$ représente un groupe alkyle en $C_1$-$C_{20}$ éventuellement ramifié ou un radical contenant au moins un autre motif acrylique,

**caractérisé en ce que**

- le maximum d'absorption du colorant diffère d'au moins 30 nm, de préférence de 40 nm, de 400 nm et
- le colorant a, à 400 nm, une densité optique représentant au maximum 60 % de son maximum d'absorption et

- on peut écrire à nouveau par variation de l'état de polarisation de la lumière actinique, et après un cycle d'effaçage/ré-écriture on atteint une intensité d'au moins 80 % de la valeur initiale, et
- l'opération d'écriture à 400 nm, dans des conditions par ailleurs identiques, n'est pas plus lente qu'à 500 nm et les valeurs de double réfraction induites dans ces conditions ne diffèrent pas de plus de 10 % de celles qui sont induites à 500 nm, et
- l'épaisseur de couche est ≥ 1 mm et
- dans la matière solide à une épaisseur de 250 nm, la densité optique est ≤ 1 à une longueur d'onde dans l'intervalle de 380 à 420 nm,

l'un au moins des polymères aux formules suivantes étant présent :

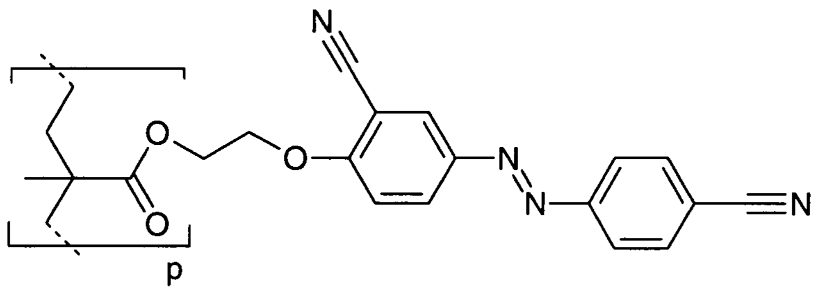

XIV

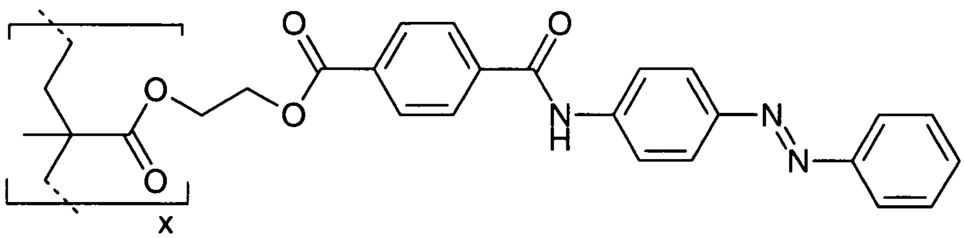

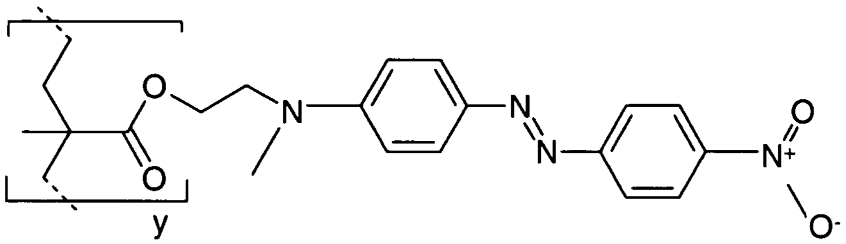

XV

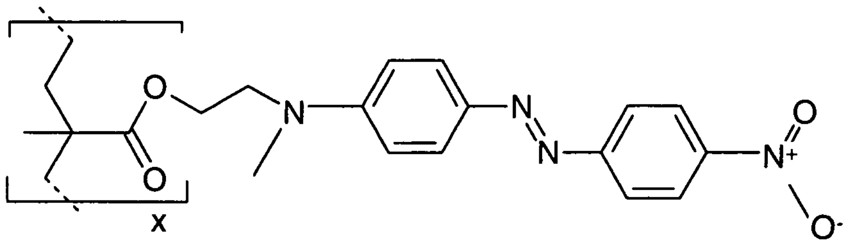

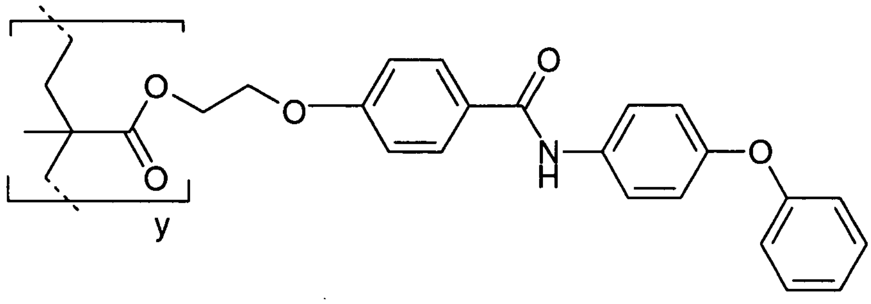

XVI

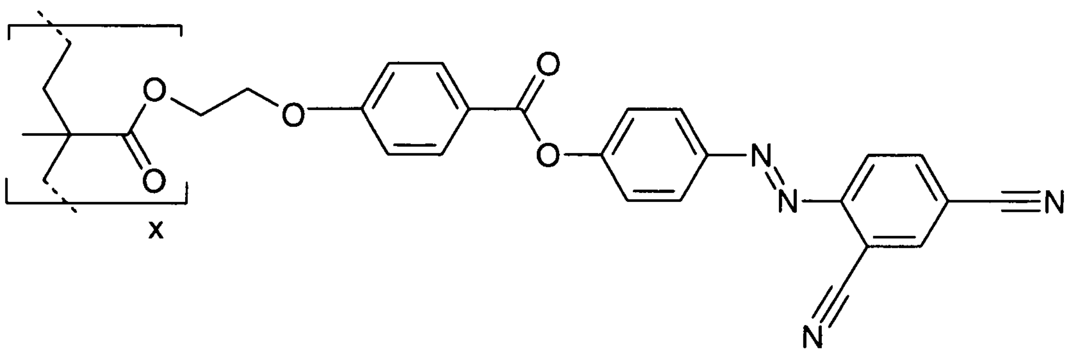

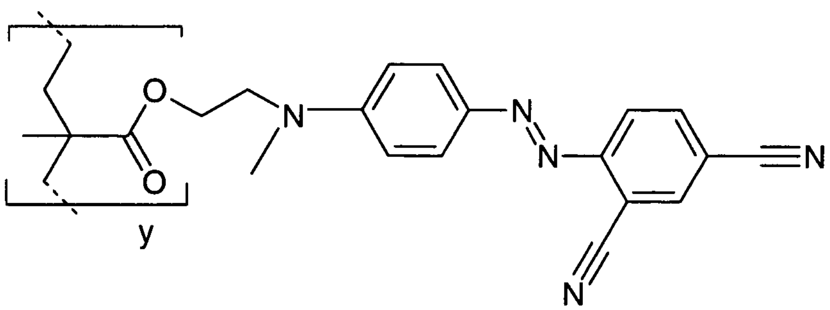

XVIII

les compositions des copolymères et polymères ternaires pouvant varier sous réserve que x + y représente 100 mol % ou bien x + y + z représente 100 mol %, et que p se situe entre 10 et 1000.

**2.** Matériau d'enregistrement selon la revendication 1, **caractérisé en ce que** le maximum d'absorption du colorant

est inférieur à 370 nm et de préférence à 360 nm.

3. Matériau d'enregistrement selon la revendication 1, **caractérisé en ce que** le maximum d'absorption du colorant est supérieur à 450 nm.

4. Matériau d'enregistrement selon la revendication 1, **caractérisé en ce qu'**il contient un copolymère contenant lui-même au moins un composant dont le maximum d'absorption est supérieur à 450 nm et au moins un composé dont le maximum d'absorption est inférieur à 360 nm.

5. Matériau d'enregistrement selon une ou plusieurs des revendications 1 à 4, **caractérisé en ce que** la radiation électromagnétique en question est de la lumière dans l'intervalle de longueur d'onde du laser, de préférence dans l'intervalle de 480 à 420 nm, plus spécialement de 390 à 410 nm et dans les meilleures conditions de 395 à 405 nm.

6. Matériau d'enregistrement selon une ou plusieurs des revendications 1 à 5, **caractérisé en ce que**, dans le cas des copolymères, le rapport x/y va de 10:90 à 90:10, de préférence de 30:70, dans les meilleures conditions de 40:60 à 60:40 et il est tout particulièrement égal à 50:50, et/ou dans le cas des polymères ternaires, x+y est supérieur à 10 mol %, de préférence supérieur à 20 mol % et dans les meilleures conditions supérieur à 30 mol %.

7. Enregistreurs **caractérisés en ce qu'**ils contiennent un matériau d'enregistrement selon les revendications 1 à 6.

8. Enregistreurs selon la revendication 7, **caractérisés en ce que** le matériau d'enregistrement contient un ou plusieurs objets cohérents de forme quelconque, de préférence un article planiforme cohérent, tout particulièrement une pellicule cohérente, et dans le cas d'une structure à couches multiples, il contient au moins une couche de substrat.

9. Enregistreurs selon la revendication 8, **caractérisés en ce qu'**ils contiennent en outre une couche réflectrice.

10. Procédé pour la préparation des enregistreurs selon au moins une des revendications 7 à 9, **caractérisé en ce qu'**il comporte un stade opératoires dans lequel on applique le milieu enregistreur par revêtement centrifuge.

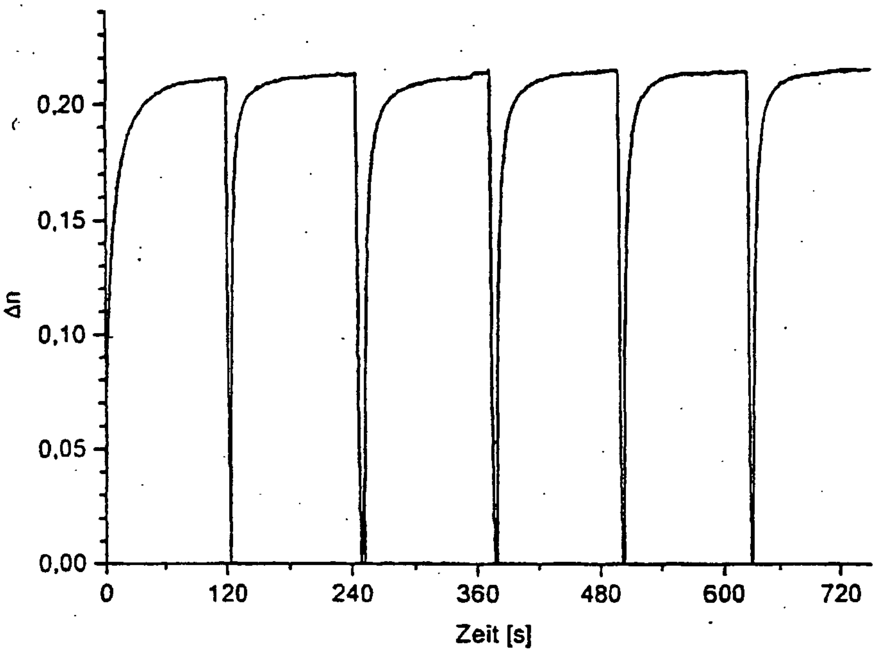


(Abb.1)